(19) **Europäisches Patentamt / European Patent Office / Office européen des brevets**

(11) **EP 3 104 569 B1**

(12) **FASCICULE DE BREVET EUROPEEN**

(45) Date de publication et mention de la délivrance du brevet:
**15.01.2020 Bulletin 2020/03**

(51) Int Cl.:
**H04L 27/26** (2006.01) **H04B 3/54** (2006.01)
**H04B 1/00** (2006.01)

(21) Numéro de dépôt: **16169610.9**

(22) Date de dépôt: **13.05.2016**

(54) **PROCÉDÉ DE SÉLECTION D'UN FILTRE À APPLIQUER EN RÉCEPTION ET EN ÉMISSION D'UNE TRAME**

VERFAHREN ZUR AUSWAHL EINES FILTERS, DER BEIM EMPFANG UND BEIM SENDEN EINES RAHMENS ZU VERWENDEN IST

METHOD FOR SELECTING A FILTER TO BE APPLIED WHEN RECEIVING AND TRANSMITTING A FRAME

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.05.2015 FR 1554503**

(43) Date de publication de la demande:
**14.12.2016 Bulletin 2016/50**

(73) Titulaire: **SAGEMCOM ENERGY & TELECOM SAS**
**92500 Rueil-Malmaison (FR)**

(72) Inventeurs:
• **TEBOULLE, Henri**
**92500 Rueil Malmaison (FR)**

• **RAZAZIAN, Kaveh**
**92500 Rueil Malmaison (FR)**

(74) Mandataire: **Cabinet Le Guen Maillet**
**3, impasse de la Vigie**
**CS 71840**
**35418 Saint-Malo Cedex (FR)**

(56) Documents cités:
**WO-A2-03/015292      US-A1- 2012 093 198**

• **YITRAN: "G.hnem: Proposal for functional requirements of a preamble based coexistence mechanism;TD11RV-069", ITU-T DRAFT ; STUDY PERIOD 2009-2012, INTERNATIONAL TELECOMMUNICATION UNION, GENEVA ; CH, vol. 4/15, 29 novembre 2011 (2011-11-29), pages 1-10, XP017598863,**

**Description**

La présente invention concerne une sélection de filtre à appliquer en réception d'une trame, transmise par un dispositif transmetteur à un dispositif récepteur, parmi un ensemble de filtres adaptés à des bandes fréquentielles respectives distinctes. La présente invention concerne aussi une éventuelle sélection de filtre à appliquer en émission de ladite trame.

Chaque transmission de trames depuis un dispositif transmetteur vers un dispositif récepteur repose sur une utilisation de bande fréquentielle prédéfinie, cette bande fréquentielle pouvant être différente d'une transmission à l'autre, parfois même dans le cadre d'envois de données depuis un même dispositif transmetteur vers un même dispositif récepteur. C'est le cas par exemple dans des réseaux de communication à courants porteurs en ligne (« powerline communications network » en anglais) selon le standard de communication G3-PLC ou selon les spécifications PRIME (« *PoweRline Intelligent Metering Evolution* » en anglais), où des schémas de modulation de type OFDM (« Orthogonal Frequency Division Multiplexing » en anglais) sont utilisés dans le cadre de réseaux d'alimentation électrique de type AMM (« Automated Meter Management » en anglais). Chaque schéma de modulation utilisable dans un tel réseau de communication à courants porteurs en ligne est associé à une bande fréquentielle dans laquelle se retrouvent les signaux utiles aux opérations de démodulation effectuées par le dispositif récepteur suite à une transmission par le dispositif transmetteur selon ledit schéma de modulation. Il est alors souhaitable d'utiliser un filtre en réception, et éventuellement un filtre en transmission, de manière à focaliser sur la bande fréquentielle concernée. On retrouve aussi ce type de transmission dans des technologies de communication radiofréquence.

Ces transmissions de trames reposent sur la mise en œuvre de préambules permettant au dispositif récepteur de se synchroniser sur ladite trame, c'est-à-dire de pouvoir déterminer un instant effectif de début de trame.

Le schéma de modulation utilisé, et donc la bande fréquentielle utilisée, sont en général prédéfinis, et connus du dispositif transmetteur et du dispositif récepteur. Il se peut qu'il y ait des changements de schéma de modulation en cours de transmission, ce qui implique potentiellement des changements de la bande fréquentielle dans laquelle se retrouvent les signaux utiles aux opérations de démodulation effectuées par le dispositif récepteur. Il existe des situations où il est avantageux de pouvoir basculer, d'une trame à l'autre, d'un schéma de modulation à un autre et donc potentiellement d'une bande de fréquentielle à une autre, sans que ces changements de schémas de modulation ne soient prédéfinis, et surtout sans que ces changements ne soient connus du dispositif récepteur. Lors d'un tel changement de bande fréquentielle, il est souhaitable d'adapter le filtre en réception (et lorsqu'il est présent, le filtre en transmission) à ce changement de bande fréquentielle, de manière à maximiser les chances de succès de démodulation correcte en réception. Le dispositif transmetteur peut alors réagir de son propre chef à des évolutions du canal de transmission utilisé entre le dispositif transmetteur et le dispositif récepteur, et ainsi accroître les performances de la transmission. Le dispositif transmetteur peut alors prévenir, dans une trame, le dispositif récepteur qu'un changement de schéma de modulation va intervenir et indiquer, implicitement ou explicitement, à quel instant ce changement va intervenir et quelle est la bande fréquentielle concernée. Cela nécessite cependant de la signalisation, consommatrice en ressources de communication.

La technologie OFDM permet de travailler à des débits de transmission élevés en accroissant l'efficacité spectrale. Dans le cas d'une allocation flexible du spectre utilisé, la technologie OFDM permet de gérer les débits de transmission, afin de lutter contre les perturbations dues aux bruits. Notamment, les technologies G3-PLC et PRIME utilisent la technologie OFDM et ont défini plusieurs bandes de fréquences entre 10 kHz et 500 kHz, afin d'optimiser les débits de transmission et lutter contre les bruits dans les transmissions. De manière conventionnelle, ces réseaux selon les technologies G3-PLC et PRIME sont gérés avec des allocations spectrales prédéfinies qui ne permettent pas de commuter suffisamment rapidement d'une bande de fréquence à une autre.

La demande internationale WO 03/015292 A2 divulgue la réception de trames de données et la détection d'un préambule par un récepteur afin de se synchroniser avec un transmetteur correspondant, les bits dans lesdites trames étant modulés selon un schéma de modulation prédéfini. En se fondant sur le préambule transmis et reçu ainsi que sur le bruit mesuré dans le canal, un filtre servant à égaliser et à débruiter les données dans la trame est construit.

L'étude de Yitran: "G.hnem: Proposai for functional requirements of a preamble based coexistence mechanism; TD11RV-069", ITU-T draft; Study Period 2009-2012, International, vol. 4/15, 29.11.2011, pages 1-10, concerne la coexistence de différents standards de transmissions par courant porteurs en ligne. Afin de pouvoir distinguer des transmissions provenant desdits standards, l'utilisation des préambules spécifiques, d'un côté, et des signaux périodiques différentes, de l'autre côté, est étudiée.

La demande US 2012/0093198 A1 montre que les préambules des trames de données reçues d'un dispositif transmetteur peuvent être utilisés pour déterminer les standards de transmissions par courants porteurs en ligne utilisés afin de permettre la démodulation desdites trames. Chaque standard utilise une ou plusieurs bandes de fréquence.

Dû aux changements rapides des conditions de bruit du canal de transmission, les systèmes de communications doivent être capables de modifier la bande de fréquence à utiliser pour chaque trame à transmettre.

Ainsi, le dispositif récepteur doit être capable, afin de modifier un filtrage appliqué en réception, de reconnaître dynamiquement à quelle bande de fréquence ledit dispositif récepteur a affaire pour chaque trame reçue. De plus, de manière préférentielle, le dispositif transmetteur doit être capable de modifier dynamiquement un filtrage appliqué en émission, en fonction de la bande de fréquence à utiliser pour chaque trame à transmettre.

Il est souhaitable de pallier ces différents inconvénients de l'état de la technique.

Il est notamment souhaitable de fournir une solution qui permette au dispositif récepteur de déterminer, sur réception de signaux représentatifs d'un préambule de trame, quel filtre appliquer en réception de la trame, sans que le dispositif transmetteur n'ait à le signaler au dispositif récepteur. Il est notamment souhaitable de fournir une solution qui soit simple à mettre en œuvre et à faible coût.

L'invention est définie dans les revendications indépendantes.

On décrit un procédé de sélection d'un filtre à appliquer en réception d'une trame parmi un premier ensemble de filtres adaptés à des bandes fréquentielles respectives, un dispositif récepteur recevant en provenance d'un dispositif transmetteur des signaux représentatifs d'un préambule de ladite trame, le préambule étant prédéfini en fonction d'un schéma de modulation selon lequel lesdits signaux ont été modulés parmi un ensemble de schémas de modulation correspondant à un ensemble de schémas de démodulation respectifs connus du dispositif récepteur et le préambule étant adapté pour permettre au dispositif récepteur de se synchroniser sur ladite trame. Le procédé est tel que le dispositif récepteur effectue les étapes suivantes : déterminer, à partir des signaux de préambule, dans quelle bande fréquentielle se trouvent les signaux utiles à une démodulation de ladite trame ; et, sélectionner le filtre à appliquer en réception de ladite trame parmi ledit premier ensemble de filtres, en fonction de ladite bande fréquentielle déterminée par le dispositif récepteur. Ainsi, grâce au préambule (qui, par définition, n'a pas à subir d'opérations de démodulation), le dispositif récepteur est capable de déterminer dans quelle bande fréquentielle se trouvent les signaux utiles à la démodulation (du reste) de la trame et ainsi appliquer le filtre approprié en réception de ladite trame. Les performances de traitement au niveau du dispositif récepteur, et notamment les opérations de démodulation, sont alors améliorées, et ce, de manière simple.

Selon un mode de réalisation particulier, ledit premier ensemble de filtres est inclus dans un convertisseur analogique-numérique de type delta-sigma dudit dispositif récepteur.

Selon un mode de réalisation particulier, pour déterminer, à partir du préambule, dans quelle bande fréquentielle se trouvent les signaux utiles à la démodulation de ladite trame, le dispositif récepteur effectue les étapes suivantes : échantillonner lesdits signaux selon une fréquence d'échantillonnage adaptée au schéma de démodulation agissant dans la bande fréquentielle la plus haute parmi l'ensemble de schémas de démodulation, afin d'obtenir une quantité $N$ d'échantillons prélevés $X_n$, $n$ étant un index d'échantillonnage allant de 0 à $N-1$, la quantité $N$ d'échantillons étant, au vu de ladite fréquence d'échantillonnage, représentative d'une période d'intégration sur laquelle le bruit potentiellement présent dans lesdits signaux reçus est statistiquement nul en moyenne ; obtenir des échantillons de référence $Y_m$ correspondant à un échantillonnage d'un préambule de référence selon ladite fréquence d'échantillonnage, les échantillons de référence étant aussi de quantité $N$, $m$ étant un index d'échantillonnage allant de 0 à $N-1$ ; calculer une somme $S$ telle que :

$$S = \sum_{n=0}^{N-1} \sum_{m=0}^{N-1} X_n . Y_m$$

effectuer une comparaison de la somme calculée S avec au moins une valeur prédéterminée ; et sélectionner le filtre à appliquer en réception de la trame parmi ledit premier ensemble de filtres, en fonction du résultat de la comparaison.

Selon un mode de réalisation particulier, outre sélectionner ledit filtre, le dispositif récepteur sélectionne, parmi l'ensemble de schémas de démodulation, le schéma de démodulation à appliquer en réception de la trame, en fonction du résultat de la comparaison. Ainsi, grâce au fait que la quantité $N$ d'échantillons est représentative d'une période d'intégration sur laquelle le bruit potentiellement présent dans lesdits signaux reçus est statistiquement nul en moyenne, ledit bruit est auto-compensé dans l'expression de la somme S qui, par ailleurs, permet de mettre en évidence un niveau d'intercorrélation entre les échantillons prélevés et les échantillons de référence, ce qui par conséquent permet de déterminer quel schéma de modulation a été appliqué, donc quelle bande fréquentielle est concernée, et donc quel filtre appliquer en réception de la trame, sans avoir recours à une signalisation spécifique.

Selon un mode de réalisation particulier, les échantillons de référence $Y_m$ sont des échantillons théoriques déterminés par application d'un échantillonnage théorique selon ladite fréquence d'échantillonnage sur le préambule tel qu'attendu pour un schéma de démodulation prédéterminé parmi ledit ensemble de schémas de démodulation, et chaque dite valeur prédéterminée est le résultat du même calcul que la somme S pour chaque autre schéma de démodulation dudit ensemble autre que ledit schéma de démodulation prédéterminé, et le dispositif récepteur sélectionne le filtre correspondant au résultat de calcul donnant la valeur la plus élevée parmi ledit premier ensemble de filtres.

Selon un mode de réalisation particulier, l'ensemble de schémas de démodulation comporte uniquement deux schémas de démodulation et ledit premier ensemble de filtres comporte uniquement deux filtres correspondants, les échantillons de référence $Y_m$ sont des échantillons relevés par le dispositif récepteur lors de la réception de la dernière trame précédente en provenance d'un même dispositif transmetteur que la trame dont les signaux reçus sont représentatifs du préambule, et le dispositif récepteur effectue la comparaison de la somme calculée S avec une unique valeur prédéterminée qui est un seuil prédéfini, et le dispositif récepteur maintient le filtre utilisé pour ladite dernière trame précédente lorsque la somme S est supérieure ou égale au seuil prédéfini et change de filtre par rapport à ladite dernière trame précédente lorsque la somme S est inférieure au seuil prédéfini.

Selon un mode de réalisation particulier, l'ensemble de schémas de démodulation consiste en un ensemble de schémas de démodulation multi-porteuse de type OFDM.

Selon un mode de réalisation particulier, le procédé comporte une sélection d'un filtre à appliquer, par un dispositif transmetteur en émission de ladite trame, parmi un second ensemble de filtres adaptés à des bandes fréquentielles respectives distinctes, le dispositif transmetteur se synchronisant sur ladite trame de manière à programmer le filtre à appliquer avant l'émission de ladite trame, comme suit : sélectionner dans quelle bande fréquentielle se trouvent les signaux résultant d'une modulation de ladite trame sélectionnée en réponse à un constat d'échecs successifs de transmission de ladite trame à destination du dispositif récepteur ; sélectionner le filtre à appliquer en émission de ladite trame parmi ledit second ensemble de filtres, en fonction de ladite bande fréquentielle déterminée par le dispositif transmetteur ; et attendre la fin d'émission de toute trame en cours alors que ladite trame est à émettre, avant d'activer le filtre sélectionné par ledit dispositif transmetteur.

Selon un mode de réalisation particulier, ledit second ensemble de filtres est inclus dans un convertisseur numérique-analogique de type delta-sigma dudit dispositif transmetteur.

Selon un mode de réalisation particulier, le dispositif transmetteur transmet chaque trame, et le dispositif récepteur reçoit chaque trame, dans le cadre de communications par courants porteurs en ligne.

On décrit également un dispositif récepteur adapté pour sélectionner un filtre à appliquer en réception d'une trame parmi un ensemble de filtres adaptés à des bandes fréquentielles respectives distinctes, le dispositif récepteur étant adapté pour recevoir des signaux représentatifs d'un préambule de ladite trame, le préambule étant prédéfini en fonction d'un schéma de modulation selon lequel lesdits signaux ont été modulés parmi un ensemble de schémas de modulation correspondant à un ensemble de schémas de démodulation respectifs connus du dispositif récepteur et le préambule étant adapté pour permettre au dispositif récepteur de se synchroniser sur ladite trame. Le dispositif récepteur est tel qu'il comporte : des moyens pour déterminer, à partir des signaux de préambule, dans quelle bande fréquentielle se trouve les signaux utiles à une démodulation de ladite trame ; et des moyens pour sélectionner le filtre à appliquer en réception de ladite trame parmi ledit ensemble de filtres, en fonction de ladite bande fréquentielle déterminée.

On décrit également un système de communication comportant un dispositif récepteur tel que précédemment évoqué, et un dispositif transmetteur adapté pour sélectionner un filtre à appliquer en émission de ladite trame, parmi un second ensemble de filtres adaptés à des bandes fréquentielles respectives distinctes, le dispositif transmetteur étant adapté pour se synchroniser sur ladite trame de manière à programmer le filtre à appliquer avant l'émission de ladite trame, en comportant : des moyens pour sélectionner dans quelle bande fréquentielle se trouvent les signaux résultant d'une modulation de ladite trame sélectionnée en réponse à un constat d'échecs successifs de transmission de ladite trame à destination du dispositif récepteur ; des moyens pour sélectionner le filtre à appliquer en émission de ladite trame parmi ledit second ensemble de filtres, en fonction de ladite bande fréquentielle déterminée par le dispositif transmetteur ; et des moyens pour attendre la fin d'émission de toute trame en cours alors que ladite trame est à émettre, avant d'activer le filtre sélectionné par ledit dispositif transmetteur.

On décrit également un programme d'ordinateur, qui peut être stocké sur un support de stockage et/ou téléchargé d'un réseau de communication, afin d'être lu par un processeur. Ce programme d'ordinateur comprend des instructions pour implémenter le procédé mentionné ci-dessus, lorsque ledit programme est exécuté par le processeur. On décrit également des moyens de stockage comprenant un tel programme d'ordinateur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

- la Fig. 1A illustre schématiquement un système de communication dans lequel l'invention peut être implémentée ;
- la Fig. 1B illustre schématiquement un exemple de préambule de trames transmises dans le système de communication ;
- la Fig. 1C illustre schématiquement un premier exemple d'architecture partielle d'un dispositif récepteur du système de communication ;
- la Fig. 1D illustre schématiquement un second exemple d'architecture partielle d'un dispositif récepteur du système de communication ;
- la Fig. 1E illustre schématiquement un exemple d'architecture partielle d'un dispositif transmetteur du système de communication ;
- la Fig. 2 illustre schématiquement un autre exemple d'architecture partielle du dispositif récepteur et/ou du dispositif transmetteur ;

- la Fig. 3A illustre schématiquement un algorithme, mis en œuvre par le dispositif récepteur, de sélection d'un filtre en réception de trame ;
- la Fig. 3B illustre schématiquement un algorithme, mis en œuvre par le dispositif récepteur, de sélection d'un filtre en réception de trame, ainsi que d'un schéma de démodulation adapté ;
- la Fig. 4 illustre schématiquement un algorithme, mis en œuvre par le dispositif récepteur, de sélection d'un filtre en réception de trame et d'un schéma de démodulation adapté, selon un premier mode de réalisation particulier ;
- la Fig. 5 illustre schématiquement un algorithme, mis en œuvre par le dispositif récepteur, de sélection d'un filtre en réception de trame et d'un schéma de démodulation adapté, selon un second mode de réalisation particulier ; et
- la Fig. 6 illustre schématiquement un algorithme, mis en œuvre par le dispositif transmetteur, de sélection d'un filtre en émission et d'activation dudit filtre de manière synchronisée avec la transmission d'une trame.

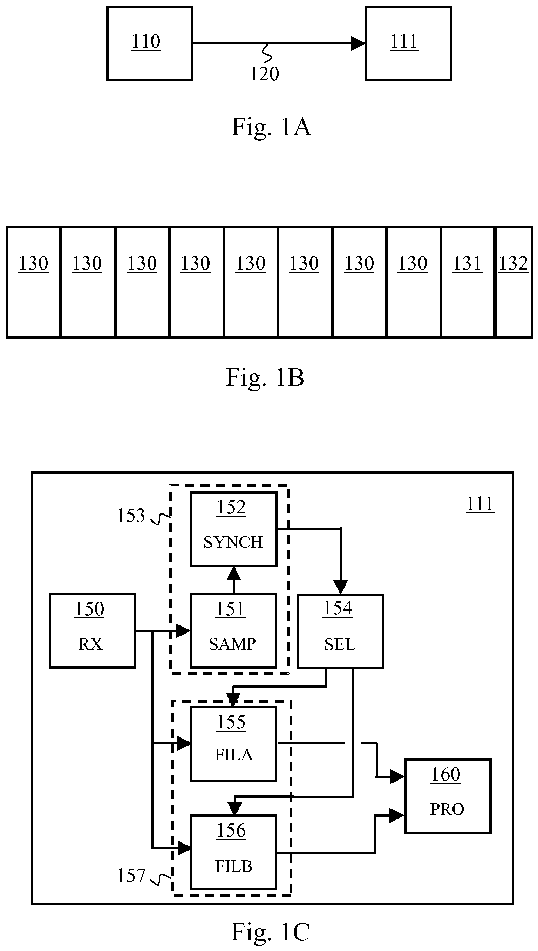

La Fig. 1A illustre schématiquement un système de communication dans lequel l'invention peut être implémentée. Le système de communication comporte un dispositif transmetteur 110 et un dispositif récepteur 111. Le dispositif transmetteur 110 est adapté pour transmettre des trames de données au dispositif récepteur 111 via un lien de communication 120. Le lien de communication peut être sans-fil ou filaire. La description qui suit prend plus particulièrement l'exemple préférentiel de transmissions par courants porteurs en ligne (« powerline transmissions » en anglais) via un lien de communication 120 de type filaire, mais les principes présentés ici s'appliquent aussi à des transmissions de signaux radiofréquence via un lien de communication 120 de type sans-fil. Le lien de communication 120 peut aussi faire partie d'un réseau de communication interconnectant une pluralité de dispositifs de communication, dont les dispositifs transmetteur 110 et récepteur 111.

Le dispositif transmetteur 110 est adapté pour transmettre les trames de données en fonction d'un schéma de modulation sélectionné parmi un ensemble prédéfini de schémas de modulation. Les schémas de modulation dudit ensemble agissent dans des bandes fréquentielles respectives, c'est-à-dire que lesdites bandes fréquentielles contiennent les signaux utiles aux opérations de démodulation correspondant aux schémas de modulation respectifs. A ces schémas de modulation correspondent des schémas de démodulation à appliquer par le dispositif récepteur 111 pour pouvoir démoduler les trames de données, et donc il existe aussi une correspondance entre lesdites bandes fréquentielles et lesdits schémas de démodulation. Ainsi, le dispositif récepteur 111 dispose d'un ensemble de schémas de démodulation agissant respectivement dans lesdites bandes fréquentielles.

Le dispositif transmetteur 110 est adapté pour générer les trames de données de sorte que chaque trame transmise sous forme de signaux modulés débute par un préambule prédéfini en fonction du schéma de modulation selon lequel lesdits signaux ont été modulés. Le préambule est adapté pour permettre au dispositif récepteur de se synchroniser sur ladite trame, c'est-à-dire de pouvoir déterminer un instant effectif de début de trame. Pour ce faire, le préambule comporte typiquement une pluralité de copies successives d'un même symbole.

Le contenu et la durée du préambule sont donc prédéfinis et dépendent du schéma de modulation utilisé par le dispositif transmetteur 110 pour transmettre ladite trame au dispositif récepteur 111. Les préambules de plusieurs trames transmises par le dispositif transmetteur 110 sont identiques lorsque le même schéma de modulation est appliqué par le dispositif transmetteur 110 pour transmettre lesdites trames au dispositif récepteur 111, et diffèrent sinon. Les schémas de modulation applicables par le dispositif transmetteur 110, et par conséquent les schémas de démodulation applicables par le dispositif récepteur 111, sont préférentiellement des schémas de modulation, respectivement démodulation, multi-porteuse de type OFDM.

Un exemple de tel préambule, tel que précisé dans les recommandations ITU G.9903 définissant le standard de communication G3-PLC, est schématiquement illustré à la Fig. 1B. Ainsi, sur la Fig. 1B, le préambule de chaque trame comporte une quantité prédéfinie de copies successives 130 d'un même symbole, appelé SYNCP dans le standard de communication G3-PLC. S'ensuivent alors un symbole 131 et un demi-symbole 132, appelés SYNCM dans le standard de communication G3-PLC, qui sont en opposition de phase par rapport aux copies successives 130 du symbole SYNCP. La forme de chaque symbole préambule est prédéfinie en fonction du schéma de modulation sélectionné par le dispositif transmetteur 110. Selon le standard de communication G3-PLC, plusieurs schémas de modulation peuvent être appliqués, en utilisant une modulation de type OFDM, dans des bandes fréquentielles respectives : un premier schéma de modulation à trente-six porteuses dans la bande fréquentielle CENELEC A, qui va d'approximativement 35 kHz à 91 kHz ; un second schéma de modulation à soixante-douze porteuses dans la bande fréquentielle FCC, qui va approximativement de 150 kHz à 480 kHz ; un troisième schéma de modulation à cinquante-quatre porteuses dans la bande fréquentielle ARIB, qui va aussi approximativement de 150 kHz à 400 kHz ; et un quatrième schéma de modulation à seize porteuses dans la bande fréquentielle CENELEC B, qui va approximativement de 98 kHz à 122 kHz. Le standard de communication G3-PLC définit notamment, pour la formation du préambule, des déphasages à appliquer entre les porteuses utilisées dans chacune de ces bandes fréquentielles. La durée de transmission de chaque symbole, appelée *temps symbole,* dépend aussi de la bande fréquentielle sur laquelle repose ledit schéma de modulation sélectionné et par conséquent du schéma de modulation sélectionné par le dispositif transmetteur 110. Ainsi, selon le standard de communication G3-PLC, le temps symbole est de 640 µs dans le cadre du premier schéma de modulation dans la bande fréquentielle CENELEC A et de 213 µs dans le cadre du second schéma de modulation dans la bande fréquentielle FCC. Une approche similaire se retrouve dans les spécifications PRIME, qui comporte également dans sa version la plus récente plusieurs bandes fréquentielles. Une approche similaire est aussi applicable dans le cadre d'une transmission de signaux radiofréquence via un lien de communication 120 de type sans-fil.

Etant donné que le dispositif transmetteur 110 est apte à sélectionner un schéma de modulation parmi un ensemble prédéfini de schémas de modulation, et notamment de passer dynamiquement (e.g. en fonction de critères de conditions de transmission sur le lien de communication 120) d'un schéma de modulation à un autre parmi ledit ensemble, le dispositif récepteur 111 peut ne pas savoir *a priori* quel schéma de démodulation appliquer lorsque ledit dispositif récepteur 111 reçoit des signaux en provenance du dispositif transmetteur 110 via le lien de communication 120 et donc ne pas savoir quelle bande fréquentielle est effectivement utilisée par le dispositif transmetteur 110.

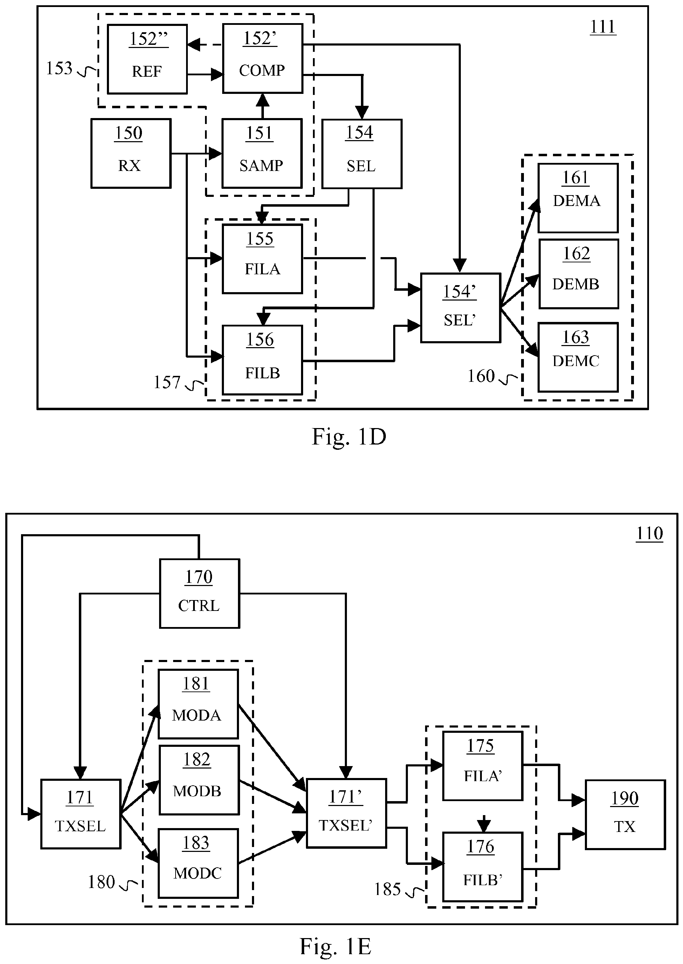

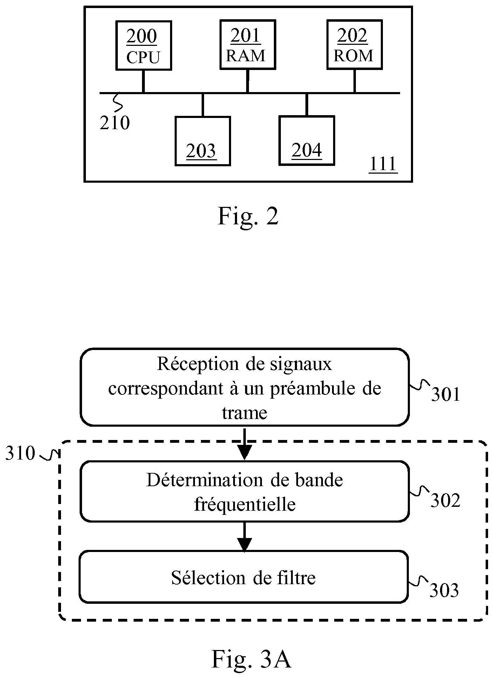

Le dispositif récepteur 111 doit être adapté pour déterminer quel filtre appliquer en réception de trame, sans en avoir été préalablement informé par le dispositif transmetteur 110. En d'autres termes, le dispositif récepteur 111 doit sélectionner un filtre adapté à la bande fréquentielle sur laquelle repose le schéma de modulation qui a été appliqué par le dispositif transmetteur 110 (et donc le schéma de démodulation à appliquer par le dispositif récepteur 111). On entend par filtre *adapté* à une bande fréquentielle, un filtre conservant les signaux dans ladite bande fréquentielle et rendant négligeables les signaux en dehors de la dite bande fréquentielle (avec potentiellement une certaine marge autour des fréquences de coupure du filtre vis-à-vis de ladite bande fréquentielle). Cette détermination du filtre est préférentiellement accompagnée d'une détermination du schéma de démodulation à appliquer, et en prenant notamment en compte le fait que le préambule de chaque trame transmise par le dispositif transmetteur 110 peut être noyé dans du bruit. Un agencement du dispositif récepteur 111 adapté pour déterminer quel filtre appliquer, sans en avoir été préalablement informé par le dispositif transmetteur 110, est présenté ci-après en relation avec la Fig. 1C. Un agencement du dispositif récepteur 111 adapté pour déterminer quel filtre appliquer et quel schéma de démodulation appliquer, sans en avoir été préalablement informé par le dispositif transmetteur 110, est présenté ci-après en relation avec la Fig. 1D. Une variante d'agencement du dispositif récepteur 111 est aussi présentée ci-après en relation avec la Fig. 2.

La Fig. 1C illustre ainsi schématiquement un premier exemple d'architecture partielle du dispositif récepteur 111, permettant au dispositif récepteur 111 de déterminer quel filtre appliquer en réception de trame, sans en avoir été préalablement informé par le dispositif transmetteur 110.

Selon l'agencement de la Fig. 1C, le dispositif récepteur 111 comporte une interface de réception RX 150 adaptée pour recevoir des signaux, sous forme analogique, transmis par le dispositif transmetteur 110 via le lien de communication 120.

Le dispositif récepteur 111 comporte en outre un module détecteur 153 adapté pour détecter le préambule de chaque trame reçue en provenance du dispositif transmetteur 110, et pour déterminer, d'après le préambule détecté, quelle bande fréquentielle a été utilisée par le dispositif transmetteur 110 pour transmettre ladite trame et donc sélectionner quel filtre appliquer en réception de trame parmi un ensemble prédéfini de filtres.

Dans un mode de réalisation particulier, le module détecteur 153 comporte un module d'échantillonnage SAMP 151 adapté pour échantillonner les signaux reçus par l'interface de réception RX 150 et qui lui sont fournis par l'interface de réception RX 150. Le module d'échantillonnage SAMP 151 est adapté pour effectuer un échantillonnage desdits signaux selon une fréquence d'échantillonnage adaptée au schéma de démodulation agissant dans la bande fréquentielle la plus haute parmi l'ensemble des schémas de démodulation que peut appliquer le dispositif récepteur 111. Le module d'échantillonnage SAMP 151 permet ainsi d'obtenir, pour chaque préambule de trame reçue en provenance du dispositif transmetteur 110, une quantité prédéfinie $N$ d'échantillons $X_n$, $n$ étant un index d'échantillonnage allant de 0 à $N$-1. On parle d'échantillons prélevés $X_n$, étant donné que ces échantillons sont obtenus à partir desdits signaux reçus. De plus, le module détecteur 153 comporte un module de synchronisation SYNCH 152 adapté pour détecter une présence de préambule dans les signaux reçus via l'interface de réception RX 150 à partir des échantillons fournis par le module d'échantillonnage SAMP 151, et effectuer une synchronisation trame, c'est-à-dire déterminer les instants de début de trames et de fin des préambules desdites trames. Un mode de réalisation du module de synchronisation SYNCH 152 sur la base d'une comparaison avec des échantillons de référence est décrit ci-après en relation avec la Fig. 1D.

Le dispositif récepteur 111 comporte en outre une pluralité de filtres, un pour chaque bande fréquentielle utilisable par le dispositif transmetteur 110 pour moduler les signaux à transmettre au dispositif récepteur 111. Dans un mode de réalisation particulier, tel que représenté sur la Fig. 1C, le dispositif récepteur 111 comporte deux filtres FILA 155 et FILB 156, correspondant respectivement à deux bandes fréquentielles distinctes utilisables par le dispositif transmetteur 110 pour moduler les signaux à destination du dispositif récepteur 111. Chaque filtre est associé à une fonction de conversion analogique-numérique. Préférentiellement, la fonction de conversion analogique-numérique est réalisée grâce à un convertisseur analogique-numérique 157 de type delta-sigma (aussi appelé sigma-delta) incluant lesdits filtres, de sorte que le convertisseur analogique-numérique 157 intègre et quantifie le signal analogique, issu de l'interface de réception RX 150, en une trame binaire. Le convertisseur analogique-numérique 157 utilise alors un filtre de décimation qui filtre le signal analogique en accroissant sa résolution.

Il convient de noter que le dispositif récepteur 111 peut physiquement comporter une pluralité de filtres ayant chacun des coefficients prédéfinis en fonction de la bande fréquentielle que ledit filtre est supposé isoler. Dans une variante de réalisation, le dispositif récepteur 111 peut physiquement comporter un unique filtre et le configurer avec des coefficients prédéfinis distincts, et ce, en fonction de la bande fréquentielle que ledit filtre est supposé isoler.

Il est aussi possible d'intégrer le module d'échantillonnage SAMP 151 au convertisseur analogique-numérique 157.

Le dispositif récepteur 111 comporte en outre un module de sélection SEL 154 adapté pour recevoir du module détecteur 153 une information représentative du filtre sélectionné par le module détecteur 153. Le module de sélection SEL 154 est adapté pour activer le filtre en réception de trame qui a été sélectionné par le module détecteur 153. Le module détecteur 153 transmet l'information représentative dudit filtre sélectionné, de sorte à ce que ledit filtre sélectionné soit activé par le module de sélection SEL 154 à la fin du préambule de la trame en cours de réception, c'est-à-dire de sorte que ledit filtre sélectionné soit actif pour les données de ladite trame qui suivent le préambule. Lorsque le module de sélection SEL 154 active un filtre parmi ladite pluralité de filtres du convertisseur analogique-numérique 157, les signaux reçus via l'interface de réception RX 150 sont filtrés par le filtre activé et transmis à une unité de traitement PRO 160 du dispositif récepteur 111. L'unité de traitement PRO 160 peut procéder notamment à la démodulation des signaux reçus via l'interface de réception RX 150 en provenance du dispositif transmetteur 110. D'autres traitements peuvent être appliqués par l'unité de traitement PRO 160. Un mode de réalisation de l'unité de traitement PRO 160 est décrit ci-après en relation avec la Fig. 1D.

La Fig. 1D illustre ainsi schématiquement un second exemple d'architecture partielle du dispositif récepteur 111, permettant au dispositif récepteur 111 de déterminer quel filtre appliquer en réception de trame, sans en avoir été préalablement informé par le dispositif transmetteur 110.

Selon l'agencement de la Fig. 1D, le dispositif récepteur 111 comporte l'interface de réception RX 150 et le module détecteur 153 adapté pour détecter le préambule de chaque trame reçue en provenance du dispositif transmetteur 110, et pour déterminer, d'après le préambule détecté, quelle bande fréquentielle a été utilisée par le dispositif transmetteur 110 pour transmettre ladite trame et donc sélectionner quel filtre appliquer en réception de trame parmi un ensemble prédéfini de filtres. Le dispositif récepteur 111 comporte en outre le convertisseur-numérique analogique 157, préférentiellement de type delta-sigma, incluant ladite pluralité de filtres. Dans un mode de réalisation particulier, tel que représenté sur la Fig. 1D, le dispositif récepteur 111 comporte les deux filtres FILA 155 et FILB 156, correspondant respectivement à deux bandes fréquentielles distinctes utilisables par le dispositif transmetteur 110 pour moduler les signaux à destination du dispositif récepteur 111. Le dispositif récepteur 111 comporte en outre le module de sélection SEL 154 adapté pour recevoir du module détecteur 153 l'information représentative du filtre sélectionné par le module détecteur 153.

Le dispositif récepteur 111 comporte en outre, intercalé entre le convertisseur analogique-numérique 157 et l'unité de traitement PRO 160, un autre module de sélection SEL' 154'.

Selon l'agencement de la Fig. 1D, l'unité de traitement PRO 160 comporte une pluralité de démodulateurs, un pour chaque schéma de démodulation utilisable par le dispositif récepteur 111 pour démoduler les signaux reçus en provenance du dispositif transmetteur 110. Dans un mode de réalisation particulier, tel que représenté sur la Fig. 1D, le dispositif récepteur 111 comporte trois démodulateurs DEMA 161, DEMB 162 et DEMC 163, correspondant respectivement à trois schémas de démodulation utilisables par le dispositif récepteur 111 pour démoduler les signaux reçus en provenance du dispositif transmetteur 110. L'agencement de la Fig. 1D comporte alors deux filtres et trois démodulateurs, étant entendu que dans ce cas de figure, deux démodulateurs correspondent à des schémas de démodulation distincts mais associés à une même bande fréquentielle. Cela est par exemple le cas selon le standard de communication G3-PLC en appliquant un même filtre pour récupérer les signaux dans la bande fréquentielle qui va approximativement de 150 kHz à 480 kHz quel que soit le schéma de modulation utilisé par le dispositif transmetteur 110 parmi le second schéma de modulation susmentionné (FCC) et le troisième schéma de modulation susmentionné (ARIB). Le démodulateur à appliquer en réception de trame (après le préambule) est activé par le module de sélection SEL' 154' d'après une information représentative du démodulateur sélectionné par le module détecteur 153.

Selon l'agencement de la Fig. 1D, le module détecteur 153 comporte le module d'échantillonnage SAMP 151 et comporte en outre un module comparateur COMP 152' adapté pour obtenir des échantillons de référence $Y_m$ à partir d'une unité de stockage REF 152". L'unité de stockage REF 152" du module détecteur 153 stocke des échantillons de référence $Y_m$, ces échantillons de référence $Y_m$ correspondant à un échantillonnage d'un préambule de référence selon ladite fréquence d'échantillonnage utilisée par le module d'échantillonnage SAMP 151. Les échantillons de référence $Y_m$ sont

aussi de quantité *N, m* étant alors un index d'échantillonnage allant de 0 à *N-1*. Comme détaillé par la suite, les échantillons de référence $Y_m$ sont, selon le mode de réalisation considéré, soit des échantillons théoriques stockés dans l'unité de stockage REF 152", par exemple à la fabrication du dispositif récepteur 111, soit des échantillons prélevés par le module d'échantillonnage SAMP 151 lors de la réception du préambule de la dernière trame précédente reçue du dispositif transmetteur 110. Comme pour l'agencement de la Fig. 1C, il est ici aussi possible d'intégrer le module d'échantillonnage SAMP 151 au convertisseur-numérique analogique 157.

Le module comparateur COMP 152' est en outre adapté pour calculer une somme S telle que :

$$S = \sum_{n=0}^{N-1} \sum_{m=0}^{N-1} X_n . Y_m$$

et pour effectuer une comparaison de la somme calculée S avec au moins une valeur prédéterminée. Comme détaillé par la suite, selon le mode de réalisation considéré, il existe soit une seule telle valeur prédéterminée qui correspond à un seuil prédéfini $S_{cor}$, soit une pluralité de telles valeurs prédéterminées qui correspondent respectivement à d'autres sommes calculées par le module comparateur COMP 152'.

Le module comparateur COMP 152' est en outre adapté pour sélectionner, parmi l'ensemble de schémas de démodulation, le filtre et le schéma de démodulation à appliquer en réception de la trame, en fonction du résultat de la comparaison.

Le module de sélection SEL' 154' est alors adapté pour recevoir du module comparateur COMP 152' l'information représentative du démodulateur sélectionné par le module comparateur COMP 152'. Le module comparateur COMP 152' transmet l'information représentative dudit filtre sélectionné, de sorte à ce que ledit filtre sélectionné soit activé par le module de sélection SEL 154 à la fin du préambule de la trame en cours de réception, c'est-à-dire de sorte que ledit filtre sélectionné soit actif pour les données de ladite trame qui suivent le préambule. Lorsque le module de sélection SEL 154 active un filtre parmi ladite pluralité de filtres du convertisseur analogique-numérique 157, les signaux reçus via l'interface de réception RX 150 sont filtrés par le filtre activé et transmis à l'unité de traitement PRO 160 via l'autre module de sélection SEL' 154'. Le module comparateur COMP 152' transmet aussi l'information représentative dudit démodulateur sélectionné, de sorte à ce que ledit démodulateur sélectionné soit activé par le module de sélection SEL' 154' à la fin du préambule de la trame en cours de réception, c'est-à-dire de sorte que ledit démodulateur sélectionné soit actif pour les données de ladite trame qui suivent le préambule. Le module de sélection SEL' 154' transmet alors les échantillons en sortie du convertisseur analogique-numérique 157 (donc après filtrage) au démodulateur sélectionné par le module comparateur COMP 152'.

La Fig. 1E illustre schématiquement un exemple d'architecture partielle du dispositif transmetteur 110.

Selon l'agencement de la Fig. 1E, le dispositif transmetteur 110 comporte une interface d'émission TX 190 adaptée pour émettre des signaux, sous forme analogique, via le lien de communication 120.

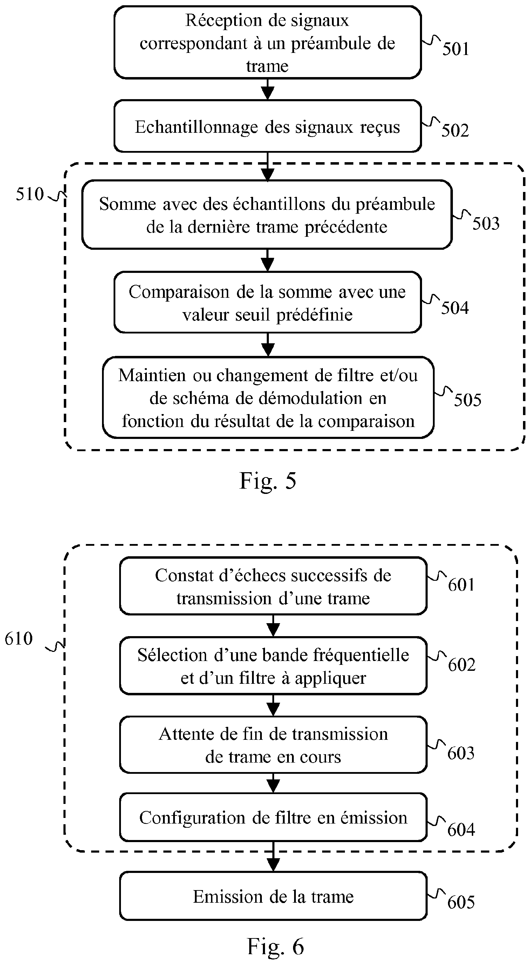

Selon l'agencement de la Fig. 1E, le dispositif transmetteur 110 comporte en outre un module de contrôle CTRL 170, adapté pour fournir sous forme numérique des signaux à transmettre sous forme de trames au dispositif récepteur 111. Le module de contrôle CTRL 170 est adapté pour fournir lesdits signaux sous forme numérique à un module de sélection TXSEL 171. Le module de sélection TXSEL 171 est adapté pour router lesdits signaux sous forme numérique à un modulateur parmi plusieurs modulateurs MODA 181, MODB 182, MODC 183 d'une unité de traitement 180 du dispositif transmetteur 110. Le modulateur vers lequel lesdits signaux sous forme numérique sont routés est sélectionné par le module de contrôle CTRL 170, qui en averti le module de sélection TXSEL 171. Le module de contrôle CTRL 170 sélectionne le schéma de modulation, et donc la bande fréquentielle correspondante, à appliquer en fonction de constats d'échecs de transmission de trames. De même, le module de contrôle CTRL 170 sélectionne un filtre à appliquer, en fonction de ladite bande fréquentielle, tel que détaillé ci-après en relation avec la Fig. 6.

Le dispositif transmetteur 110 comporte ainsi en outre une pluralité de filtres, un pour chaque bande fréquentielle utilisable par le dispositif transmetteur 110 pour moduler les signaux à transmettre au dispositif récepteur 111. Dans un mode de réalisation particulier, tel que représenté sur la Fig. 1E, le dispositif transmetteur 110 comporte deux filtres FILA' 175 et FILB' 176 (correspondant respectivement aux filtres FILA 155 et FILB 156 du dispositif récepteur 111), correspondant respectivement à deux bandes fréquentielles distinctes utilisables par le dispositif transmetteur 110 pour moduler les signaux à destination du dispositif récepteur 111. Chaque filtre est associé à une fonction de conversion numérique-analogique. Préférentiellement, la fonction de conversion numérique-analogique est réalisée grâce à un convertisseur numérique-analogique 185 de type delta-sigma (aussi appelé sigma-delta) incluant lesdits filtres, de sorte que le convertisseur numérique-analogique 180 sigma-delta utilise une technique de sur-échantillonnage afin de réduire le bruit dans la bande fréquentielle utilisée en l'étalant selon un spectre plus large. Le convertisseur numérique-analogique 180 utilise alors un filtre à interpolation permettant d'effectuer le sur-échantillonnage. Le filtre à appliquer est sélectionné par le module de contrôle 170 via un module de sélection TXSEL' 171' qui prend en entrées les sorties respectives des modulateurs MODA 181, MODB 182, MODC 183, et qui route les signaux numériques issus du modulateur sélectionné par le module de contrôle 170 vers le filtre sélectionné. Les sorties respectives des filtres FILA' 175 et FILB' 176 sont connectées à l'interface d'émission TX 190, de manière à permettre la transmission de trames, sous forme analogique, au dispositif récepteur 111.

Il convient de noter que le dispositif transmetteur 110 peut physiquement comporter une pluralité de filtres ayant chacun des coefficients prédéfinis en fonction de la bande fréquentielle que ledit filtre est supposé isoler. Dans une variante de réalisation, le dispositif transmetteur 110 peut physiquement comporter un unique filtre et le configurer avec des coefficients prédéfinis distincts, et ce, en fonction de la bande fréquentielle que ledit filtre est supposé isoler.

La Fig. 2 illustre schématiquement un autre exemple d'architecture partielle du dispositif récepteur 111 (respectivement du dispositif transmetteur 110). Le dispositif récepteur 111 (respectivement du dispositif transmetteur 110) comprend alors, reliés par un bus de communication 210 : un processeur ou CPU (« Central Processing Unit » en anglais) 200 ; une mémoire vive RAM (« Random Access Memory » en anglais) 201 ; une mémoire morte ROM (« Read Only Memory » en anglais) 202 ; une unité de stockage ou un lecteur de support de stockage, tel qu'un lecteur de cartes SD (« Secure Digital » en anglais) 203 ; une interface 204 permettant au dispositif récepteur 111 de recevoir des signaux en provenance du dispositif transmetteur 110 (respectivement permettant au dispositif transmetteur 110 de transmettre des signaux vers le dispositif récepteur 111), d'en faire une conversion analogique-numérique et (respectivement d'en faire une conversion numérique analogique dans le cas du dispositif transmetteur 110), sur commande, de les filtrer. Par analogie avec les agencements des Figs. 1C et 1D, l'interface 204 correspond alors à l'ensemble formé par l'interface de réception RX 150, le convertisseur analogique-numérique 157, et, si présent, le module d'échantillonnage 151. Par analogie avec l'agencement de la Fig. 1E, l'interface 204 correspond alors à l'ensemble formé par l'interface d'émission TX 190 et le convertisseur numérique-analogique 180.

Le processeur 200 est capable d'exécuter des instructions chargées dans la RAM 201 à partir de la ROM 202, d'une mémoire externe (non représentée), d'un support de stockage (tel qu'une carte SD), ou d'un réseau de communication. Lorsque le dispositif récepteur 111 (respectivement le dispositif transmetteur 110) est mis sous tension, le processeur 200 est capable de lire de la RAM 201 des instructions et de les exécuter. Ces instructions forment un programme d'ordinateur causant la mise en œuvre, par le processeur 200, de tout ou partie d'étapes de traitements numériques 310, 330, 410, 510 décrites ci-après en relation avec les Figs. 3A, 3B, 4 et 5 (respectivement de tout ou partie d'étapes de traitements numériques 610 décrites ci-après en relation avec la Fig. 6 dans le cas du dispositif transmetteur 110).

Tout ou partie des étapes de traitements numériques 310, 330, 410, 510 décrites ci-après en relation avec les Figs. 3A, 3B, 4 et 5 (respectivement de tout ou partie d'étapes de traitements numériques 610 décrites ci-après en relation avec la Fig. 6 dans le cas du dispositif transmetteur 110) peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais).

La Fig. 3A illustre schématiquement un algorithme, mis en œuvre par le dispositif récepteur 111, de sélection de filtre à appliquer en réception d'une trame en provenance du dispositif transmetteur 110, et ce parmi un ensemble prédéfini de filtres adaptés aux bandes fréquentielles associées aux différents schémas de modulation utilisables par le dispositif transmetteur 110.

Dans une étape 301, le dispositif récepteur 111 reçoit des signaux représentatifs du préambule d'une trame transmise par le dispositif transmetteur 110. Le préambule est prédéfini en fonction d'un schéma de modulation selon lequel les signaux reçus à l'étape 301 ont été modulés par le dispositif transmetteur 110, et est destiné à permettre au dispositif récepteur de se synchroniser sur ladite trame. Le préambule suit par exemple le format déjà présenté en relation avec la Fig. 1B.

Dans une étape 302 suivante, le dispositif récepteur 111 détermine une bande fréquentielle dans laquelle se retrouve le signal nécessaire aux opérations de démodulation à effectuer par le dispositif récepteur 111 pour le reste de la trame en cours de réception. Le préambule permet de déterminer quel schéma de modulation a été utilisé par le dispositif transmetteur 110 pour transmettre ladite trame, et donc quel schéma de démodulation doit être utilisé par le dispositif récepteur 111 pour démoduler ladite trame, et donc quelle est la bande fréquentielle concernée.

Dans une étape 303 suivante, le dispositif récepteur 111 sélectionne le filtre correspondant à ladite bande fréquentielle parmi la pluralité de filtres dont dispose le dispositif récepteur 111. En sélectionnant en réception de trame le filtre adapté à la bande fréquentielle correspondant au schéma de modulation utilisé par le dispositif transmetteur 110 pour transmettre ladite trame, d'éventuels signaux en dehors de cette bande fréquentielle sont écartés, ce qui améliore les performances de démodulation (et de traitement, d'une manière plus générale) au niveau du dispositif récepteur 111.

On peut noter que les étapes 302 et 303 peuvent être considérées comme des étapes de traitement numérique, regroupées sous la référence 310 sur la Fig. 3A, qui peuvent alors être aussi bien mises en œuvre sous forme logicielle que sous forme matérielle, comme déjà évoqué.

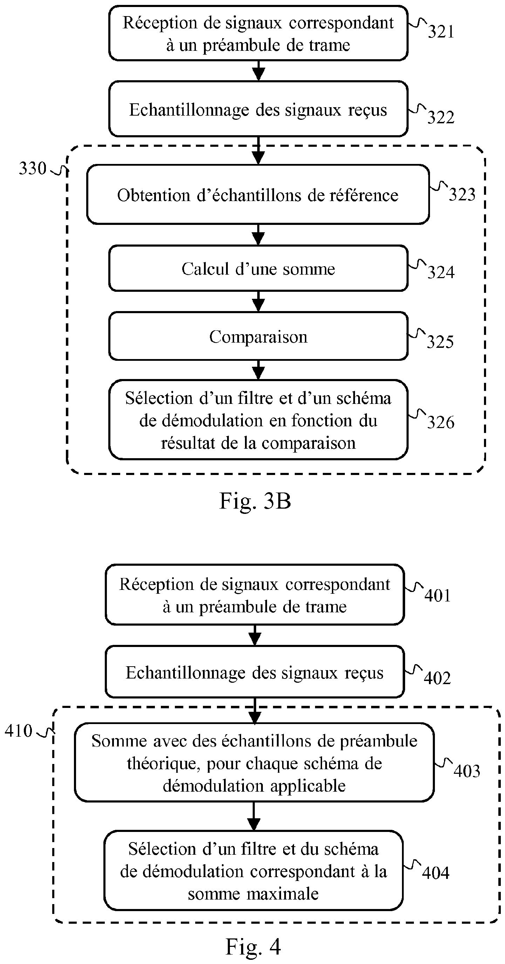

La Fig. 3B illustre schématiquement un algorithme, mis en œuvre par le dispositif récepteur 111, de sélection d'un filtre et d'un schéma de démodulation à appliquer en réception d'une trame en provenance du dispositif transmetteur 110, et ce parmi respectivement un ensemble prédéfini de filtres et un ensemble prédéfini de schémas de démodulation.

Dans une étape 321, le dispositif récepteur 111 reçoit des signaux représentatifs du préambule d'une trame transmise par le dispositif transmetteur 110. Le préambule est prédéfini en fonction d'un schéma de modulation selon lequel les signaux reçus à l'étape 321 ont été modulés par le dispositif transmetteur 110, et est destiné à permettre au dispositif récepteur de se synchroniser sur ladite trame. Le préambule suit par exemple le format déjà présenté en relation avec la Fig. 1B. Les signaux représentatifs du préambule peuvent cependant être bruités.

Dans une étape 322 suivante, le dispositif récepteur 111 échantillonne lesdits signaux reçus, selon une fréquence d'échantillonnage adaptée au schéma de démodulation agissant dans la bande fréquentielle la plus haute parmi l'ensemble de schémas de démodulation. Comme déjà indiqué, le dispositif récepteur obtient ainsi une quantité $N$ d'échantillons prélevés $X_n$, $n$ étant un index d'échantillonnage allant de 0 à $N-1$. La quantité $N$ d'échantillons est, en considérant ladite fréquence d'échantillonnage, représentative d'une période d'intégration T sur laquelle le bruit potentiellement présent dans les signaux reçus à l'étape 321 est statistiquement nul en moyenne. En reprenant les exemples de schémas de modulation (et donc de démodulation) introduits en relation avec la Fig. 1A en référence au standard de communication G3-PLC, une fréquence d'échantillonnage adaptée audit second schéma de modulation dans la bande fréquentielle FCC est appliquée par le dispositif récepteur 111 à l'étape 322, soit par exemple 1,2 MHz.

Dans une étape 323 suivante, le dispositif récepteur 111 obtient des échantillons de référence $Y_m$ correspondant à un échantillonnage d'un préambule de référence selon ladite fréquence d'échantillonnage, les échantillons de référence $Y_m$ étant aussi de quantité $N$, $m$ étant alors un index d'échantillonnage allant de 0 à $N-1$.

Selon un premier mode de réalisation particulier, ledit ensemble de schémas de démodulation comporte deux ou plus de deux schémas de démodulation applicables en réception de trames en provenance du dispositif transmetteur 110. Les échantillons de référence $Y_m$ sont alors des échantillons théoriques déterminés par application d'un échantillonnage théorique selon ladite fréquence d'échantillonnage sur le préambule tel qu'attendu pour un schéma de démodulation prédéterminé parmi ledit ensemble de schémas de démodulation. Cet aspect est détaillé ci-après en relation avec la Fig. 4.

Selon un second mode de réalisation particulier, ledit ensemble de schémas de démodulation comporte uniquement deux schémas de démodulation applicables en réception de trames en provenance du dispositif transmetteur 110. Par exemple, selon le standard de communication G3-PLC, ledit ensemble de schémas de démodulation comporte uniquement ledit premier schéma de modulation dans la bande fréquentielle CENELEC A et ledit second schéma de modulation dans la bande fréquentielle FCC. Les échantillons de référence $Y_m$ sont alors des échantillons relevés par le dispositif récepteur 111 lors de la réception de la dernière trame précédente en provenance du dispositif transmetteur 110. Cet aspect est détaillé ci-après en relation avec la Fig. 5.

Dans une étape 324 suivante, le dispositif récepteur 111 calcule une somme S telle que :

$$S = \sum_{n=0}^{N-1} \sum_{m=0}^{N-1} X_n . Y_m$$

Dans une étape 325 suivante, le dispositif récepteur 111 effectue une comparaison de la somme calculée S avec au moins une valeur prédéterminée.

Dans ledit premier mode de réalisation particulier, le dispositif récepteur 111 effectue une comparaison de la somme calculée S avec une valeur prédéterminée pour chaque autre schéma de démodulation applicable par ledit dispositif récepteur 111 en réception de trames en provenance du dispositif transmetteur 110, *i.e.* pour chaque schéma de démodulation contenu dans ledit ensemble de schémas de démodulation autre que celui pour lequel la somme S a été calculée à l'étape 324. Chaque dite valeur prédéterminée est alors le résultat du même calcul que la somme S, mais pour chaque autre schéma de démodulation applicable par ledit dispositif récepteur 111 en réception de trames en provenance du dispositif transmetteur 110. Cet aspect est détaillé ci-après en relation avec la Fig. 4.

Dans ledit second mode de réalisation particulier, le dispositif récepteur 111 effectue une comparaison de la somme calculée S avec une unique valeur prédéterminée, c'est-à-dire le seuil prédéfini $S_{cor}$ déjà mentionné. Cet aspect est détaillé ci-après en relation avec la Fig. 5.

Dans une étape 326 suivante, le dispositif récepteur 111 sélectionne, parmi l'ensemble de filtres, le filtre à appliquer en réception de la trame, en fonction du résultat de la comparaison. De plus, le dispositif récepteur 111 sélectionne, parmi l'ensemble de schémas de démodulation, le schéma de démodulation à appliquer en réception de la trame, en fonction du résultat de la comparaison. Le dispositif récepteur 111 applique alors le filtre sélectionné pour filtrer les signaux qui suivent le préambule de ladite trame en cours de réception et applique le schéma de démodulation sélectionné pour démoduler la trame transmise par le dispositif transmetteur 110 à partir des signaux filtrés.

Dans ledit premier mode de réalisation particulier, le dispositif récepteur sélectionne le filtre et le schéma de démodulation qui correspondent au résultat de calcul donnant la valeur la plus élevée parmi les schémas de démodulation applicables par le dispositif récepteur 111 en réception de trames en provenance du dispositif transmetteur 110. Cet aspect est détaillé ci-après en relation avec la Fig. 4.

Dans ledit second mode de réalisation particulier, le dispositif récepteur 111 maintient le même filtre et le même schéma de démodulation que ceux utilisés en réception de la dernière trame précédente en provenance du dispositif transmetteur 110, lorsque le résultat du calcul de la somme S est supérieur ou égal au seuil prédéfini $S_{cor}$. Sinon, le dispositif récepteur 111 change de filtre et de schéma de démodulation par rapport à ceux utilisés en réception de la dernière trame précédente en provenance du dispositif transmetteur 110. Cet aspect est détaillé ci-après en relation avec la Fig. 5. Le seuil prédéfini $S_{cor}$ est fixé de telle sorte que le calcul de la somme S pour des préambules différents donne un résultat strictement inférieur au seuil prédéfini $S_{cor}$ et que le calcul de la somme S pour des préambules identiques donne un résultat supérieur ou égal au seuil prédéfini $S_{cor}$. Le seuil prédéfini $S_{cor}$ peut ainsi être fixé de manière théorique ou expérimentale.

On peut noter que les étapes 323 à 326 peuvent être considérées comme des étapes de traitement numérique, regroupées sous la référence 330 sur la Fig. 3B, qui peuvent alors être aussi bien mises en œuvre sous forme logicielle que sous forme matérielle, comme déjà évoqué.

La Fig. 4 illustre schématiquement un algorithme, mis en œuvre par le dispositif récepteur 111, de sélection d'un filtre et d'un schéma de démodulation en réception de trame, selon ledit premier mode de réalisation particulier.

Dans une étape 401, le dispositif récepteur 111 reçoit des signaux représentatifs du préambule d'une trame transmise par le dispositif transmetteur 110. L'étape 401 correspond à l'étape 301 de la Fig. 3A et à l'étape 321 de la Fig. 3B.

Dans une étape 402 suivante, le dispositif récepteur 111 échantillonne lesdits signaux reçus, selon une fréquence d'échantillonnage adaptée au schéma de démodulation agissant dans la bande fréquentielle la plus haute parmi l'ensemble de schémas de démodulation. L'étape 402 correspond à l'étape 322 de la Fig. 3B.

Dans une étape 403 suivante, le dispositif récepteur 111 calcule la somme S pour chaque schéma de démodulation dudit ensemble prédéfini de schémas de démodulation. Ainsi, les échantillons de référence $Y_m$ diffèrent d'un calcul à l'autre de la somme S dans le cadre de l'étape 403. En effet, selon le schéma de démodulation considéré, les échantillons de référence $Y_m$ correspondent à un échantillonnage, selon ladite fréquence d'échantillonnage, d'un préambule théorique de référence qui dépend du schéma de démodulation considéré.

Dans une étape 404 suivante, le dispositif récepteur 111 compare les résultats des calculs de la somme S effectués à l'étape 403 pour ledit ensemble de schémas de démodulation. En d'autres termes, le dispositif récepteur 111 effectue une comparaison de la somme calculée S pour un desdits schémas de démodulation avec une valeur prédéterminée pour chaque autre schéma de démodulation applicable par ledit dispositif récepteur 111 en réception de trames en provenance du dispositif transmetteur 110. Le dispositif récepteur 111 sélectionne ensuite le schéma de démodulation qui fournit le résultat de calcul de la somme S de valeur la plus élevée. En effet, étant donné que le bruit potentiellement présent dans les signaux reçus à l'étape 401 est statistiquement à moyenne nulle sur ladite période d'intégration T, le schéma de démodulation qui fournit le résultat de calcul de la somme S de valeur la plus élevée est celui qui présente le plus fort niveau d'intercorrélation (« cross corrélation » en anglais) entre l'échantillonnage des signaux reçus et l'échantillonnage du préambule théorique. Le dispositif récepteur 111 applique alors le schéma de démodulation sélectionné pour démoduler la trame transmise par le dispositif transmetteur 110. En outre, d'après le résultat de calcul de la somme S, le dispositif récepteur 111 sélectionne le filtre adapté à la bande fréquentielle associée au schéma de démodulation sélectionné, et active le filtre sélectionné, de manière à focaliser sur les signaux dans ladite bande fréquentielle.

On peut noter que les étapes 403 et 404 peuvent être considérées comme des étapes de traitement numérique, regroupées sous la référence 410 sur la Fig. 4, qui peuvent alors être aussi bien mises en œuvre sous forme logicielle que sous forme matérielle, comme déjà évoqué.

La Fig. 5 illustre schématiquement un algorithme, mis en œuvre par le dispositif récepteur 111, de sélection d'un schéma de démodulation, selon ledit second mode de réalisation particulier.

Dans une étape 501, le dispositif récepteur 111 reçoit des signaux représentatifs du préambule d'une trame transmise par le dispositif transmetteur 110. L'étape 501 correspond à l'étape 301 de la Fig. 3A et à l'étape 321 de la Fig. 3B.

Dans une étape 502 suivante, le dispositif récepteur 111 échantillonne lesdits signaux reçus, selon une fréquence d'échantillonnage adaptée au schéma de démodulation agissant dans la bande fréquentielle la plus haute parmi l'ensemble de schémas de démodulation. L'étape 502 correspond à l'étape 322 de la Fig. 3B. Dans le cadre de l'agencement de la Fig. 1C, les échantillons obtenus à l'étape 502 sont stockés par le module comparateur COMP 152 en vue de leur stockage ultérieur (après sélection du schéma de démodulation à appliquer pour la trame dont les signaux représentatifs du préambule ont été reçus à l'étape 501) dans l'unité de stockage REF 153.

Dans une étape 503 suivante, le dispositif récepteur 111 calcule la somme S, les échantillons de référence $Y_m$ étant obtenus par échantillonnage, selon ladite fréquence d'échantillonnage, des signaux représentatifs du préambule de la dernière trame précédente transmise par le dispositif transmetteur 110 au dispositif récepteur 111.

Dans une étape 504 suivante, le dispositif récepteur 111 compare le résultat du calcul de la somme S avec le seuil prédéfini $S_{cor}$.

Dans une étape 505 suivante, le dispositif récepteur 111 sélectionne le schéma de démodulation à appliquer, en fonction du résultat de la comparaison effectuée à l'étape 504. Etant donné que seulement deux schémas de démodulation sont applicables par le dispositif récepteur 111, le dispositif récepteur 111 maintient, pour démoduler la trame dont les signaux représentatifs du préambule ont été reçus à l'étape 501, le schéma de démodulation utilisé par le dispositif récepteur 111 pour démoduler la dernière trame précédente transmise par le dispositif transmetteur 110, lorsque le résultat du calcul de la somme S est supérieur ou égal au seuil prédéfini $S_{cor}$. Sinon, le dispositif récepteur 111 change de schéma de démodulation, pour démoduler la trame dont les signaux représentatifs du préambule ont été reçus à l'étape 501, par rapport au schéma de démodulation utilisé par le dispositif récepteur 111 pour démoduler la dernière trame précédente transmise par le dispositif transmetteur 110. En effet, si le dispositif transmetteur 110 n'a pas changé de schéma de modulation depuis la dernière trame précédente transmise par le dispositif transmetteur 110 au dispositif récepteur 111, un fort niveau d'intercorrélation apparaît entre l'échantillonnage des signaux reçus à l'étape 501 et l'échantillonnage des signaux représentatifs du préambule de la dernière trame précédente transmise par le dispositif transmetteur 110, ce qui implique que le résultat du calcul de la somme S soit supérieur ou égal au seuil prédéfini $S_{cor}$. Le dispositif récepteur 111 applique alors le schéma de démodulation sélectionné pour démoduler la trame dont les signaux représentatifs du préambule ont été reçus à l'étape 501. En outre, d'après le résultat de calcul de la somme S, le dispositif récepteur 111 sélectionne le filtre adapté à la bande fréquentielle associée au schéma de démodulation sélectionné, et active le filtre sélectionné, de manière à focaliser sur les signaux dans ladite bande fréquentielle.

Pour la toute première trame transmise par le dispositif transmetteur 110 au dispositif récepteur 111 (pour laquelle il n'y a donc pas d'échantillons de référence $y_m$), le schéma de modulation et le schéma de démodulation correspondant qui sont appliqués sont prédéfinis, et le filtre à utiliser en réception par le dispositif récepteur 111 l'est aussi (puisqu'il existe un filtre au sein du dispositif récepteur pour chaque bande fréquentielle utilisable pour permettre au dispositif transmetteur 110 de moduler les signaux à transmettre au dispositif récepteur 111).

On peut noter que les étapes 503 à 505 peuvent être considérées comme des étapes de traitement numérique, regroupées sous la référence 510 sur la Fig. 5, qui peuvent alors être aussi bien mises en œuvre sous forme logicielle que sous forme matérielle, comme déjà évoqué.

La Fig. 6 illustre schématiquement un algorithme, mis en œuvre par le dispositif transmetteur 110, de sélection d'un filtre en émission parmi un ensemble prédéfini de filtres adaptés aux bandes fréquentielles associées aux différents schémas de modulation utilisables par le dispositif transmetteur 110, et d'activation dudit filtre de manière synchronisée avec l'émission d'une trame.

Dans une étape 601, le dispositif transmetteur 110 effectue un constat d'échecs successifs de transmission d'une trame à destination du dispositif récepteur 111 (pas d'accusé de réception reçu du dispositif récepteur 111 indiquant que ledit dispositif récepteur 111 a bien reçu ladite trame).

Dans une étape 602 suivante, le dispositif transmetteur 110, avant retransmission de ladite trame, sélectionne en fonction des précédents échecs de transmission de ladite trame, une nouvelle bande fréquentielle à utiliser et donc le filtre à utiliser en émission. La sélection de la bande fréquentielle à utiliser va de paire avec la sélection d'un schéma de modulation adapté d'après les précédents échecs de transmission de ladite trame.

Dans une étape 603 suivante, le dispositif transmetteur 110 attend que toute trame éventuellement en cours de d'émission par ledit dispositif transmetteur 110 soit entièrement émise.

Dans une étape 604 suivante, le dispositif transmetteur 110 configure et active le filtre sélectionné à l'étape 602. Ladite trame peut alors être transmise, dans une étape 605 suivante, par le dispositif transmetteur 110.

On peut noter que les étapes 601 à 604 peuvent être considérées comme des étapes de traitement numérique, regroupées sous la référence 610 sur la Fig. 6, qui peuvent alors être aussi bien mises en œuvre sous forme logicielle que sous forme matérielle, comme déjà évoqué.

Il convient de noter que les communications entre le dispositif transmetteur 110 et le dispositif récepteur 111 peuvent être mises en œuvre au sein d'un réseau de communication. Dans ce cas, lorsque ledit second mode de réalisation particulier est implémenté par un dispositif destinataire tel que le dispositif récepteur 111, ledit dispositif destinataire exécute l'algorithme de la Fig. 5 entre deux trames successives transmises par un même dispositif source, tel que le dispositif transmetteur 110, audit dispositif destinataire. Tel serait par exemple le cas dans un réseau de communication par courants porteurs en ligne conforme au standard de communication G3-PLC ou aux spécifications PRIME.

A noter que si les filtres appliqués sont en général identiques à l'émission et à la réception, ils peuvent aussi être différents.

## Revendications

1. Procédé de réception et démodulation par un dispositif récepteur (111) de signaux représentatifs de trames de données en provenance d'un dispositif transmetteur (110), lesdites trames de données étant modulées par ledit dispositif transmetteur (110) en fonction d'un schéma de modulation sélectionné parmi un ensemble de schémas de modulation, lesdits signaux de trames de données incluant un préambule prédéfini en fonction du schéma de modulation selon lequel lesdits signaux de trames de données ont été modulés, ledit procédé incluant les étapes suivantes :

- synchroniser ledit dispositif récepteur sur une trame de données reçue,
- déterminer (302), à partir des signaux de préambule de ladite trame de données reçue, le schéma de modulation qui a été sélectionné par ledit dispositif transmetteur (110) pour la transmission de ladite trame de données, et
- démoduler les signaux représentatifs de ladite trame de données reçue en utilisant le schéma de modulation déterminé à partir du préambule de ladite trame de données reçue,

**caractérisé en ce que** le dispositif récepteur (111) effectue en outre les étapes suivantes :

- déterminer à partir du schéma de modulation déterminé à partir du préambule de ladite trame de données reçue, la bande fréquentielle correspondant à ce schéma de modulation,
- sélectionner (303), parmi un premier ensemble prédéfini de filtres, un filtre adapté à la bande fréquentielle déterminée correspondant audit schéma de modulation, et
- appliquer ledit filtre sélectionné aux signaux représentatifs de ladite trame de données pour les données qui suivent ledit préambule préalablement à ladite étape de démodulation des signaux représentatifs de ladite trame de données reçue.

2. Procédé de réception et démodulation selon la revendication 1, **caractérisé en ce que** ledit premier ensemble de filtres est inclus dans un convertisseur analogique-numérique de type delta-sigma dudit dispositif récepteur.

3. Procédé de réception et démodulation selon l'une quelconque des revendications 1 et 2, **caractérisé en ce que**, pour déterminer, à partir des signaux de préambule de ladite trame de données reçue, le schéma de modulation qui a été sélectionné par ledit dispositif transmetteur (110) pour la transmission de ladite trame de données, le dispositif récepteur (111) effectue les étapes suivantes :

- échantillonner (322) les signaux du préambule selon une fréquence d'échantillonnage adaptée au schéma de démodulation agissant dans la bande fréquentielle la plus haute parmi l'ensemble de schémas de démodulation, afin d'obtenir une quantité $N$ d'échantillons prélevés $X_n$, $n$ étant un index d'échantillonnage allant de $0$ à $N-1$,
la quantité $N$ d'échantillons étant, au vu de ladite fréquence d'échantillonnage, représentative d'une période d'intégration sur laquelle le bruit potentiellement présent dans lesdits signaux est statistiquement nul en moyenne ;
- obtenir (323) des échantillons de référence $Y_m$ correspondant à un échantillonnage d'un préambule de référence selon ladite fréquence d'échantillonnage, les échantillons de référence étant aussi de quantité $N$, $m$ étant un index d'échantillonnage allant de $0$ à $N-1$ ;
- calculer (324) une somme S telle que :

$$S = \sum_{n=0}^{N-1} \sum_{m=0}^{N-1} X_n . Y_m$$

- effectuer (325) une comparaison de la somme calculée S avec au moins une valeur prédéterminée ; et
- sélectionner (326) le filtre à appliquer en réception de la trame parmi ledit premier ensemble de filtres, en fonction du résultat de la comparaison.

4. Procédé de réception et démodulation selon la revendication 3, **caractérisé en ce que** le dispositif récepteur (111) sélectionne (326), parmi l'ensemble de schémas de démodulation, le schéma de démodulation à appliquer en réception de la trame, en fonction du résultat de ladite comparaison.

5. Procédé de réception et démodulation selon l'une quelconque des revendications 3 et 4, **caractérisé en ce que** les échantillons de référence $Y_m$ sont des échantillons théoriques déterminés par application d'un échantillonnage théorique selon ladite fréquence d'échantillonnage sur le préambule tel qu'attendu pour un schéma de démodulation prédéterminé parmi ledit ensemble de schémas de démodulation, et **en ce que** chaque dite valeur prédéterminée est le résultat du même calcul que la somme S pour chaque autre schéma de démodulation dudit ensemble autre que ledit schéma de démodulation prédéterminé, et **en ce que** le dispositif récepteur sélectionne (404) le filtre correspondant au résultat de calcul donnant la valeur la plus élevée parmi ledit premier ensemble de filtres.

6. Procédé de réception et démodulation selon l'une quelconque des revendications 3 et 4, **caractérisé en ce que** l'ensemble de schémas de démodulation comporte uniquement deux schémas de démodulation et ledit premier ensemble de filtres comporte uniquement deux filtres correspondants, les échantillons de référence Y_m sont des échantillons relevés par le dispositif récepteur lors de la réception de la dernière trame précédente en provenance dudit dispositif transmetteur, et **en ce que** le dispositif récepteur effectue la comparaison de la somme calculée S avec une unique valeur prédéterminée qui est un seuil prédéfini, et **en ce que** le dispositif récepteur maintient (505) le filtre utilisé pour ladite dernière trame précédente lorsque la somme S est supérieure ou égale au seuil prédéfini et change (505) de filtre par rapport à ladite dernière trame précédente lorsque la somme S est inférieure au seuil prédéfini.

7. Procédé de réception et démodulation selon l'une quelconque des revendications 1 à 6, **caractérisé en ce que** l'ensemble de schémas de démodulation consiste en un ensemble de schémas de démodulation multi-porteuse de type OFDM.

8. Procédé de transmission d'une trame de données par un dispositif transmetteur (110), ledit procédé de transmission étant **caractérisé en ce qu'**il comporte une sélection d'un filtre à appliquer parmi un second ensemble de filtres adaptés à des bandes fréquentielles respectives distinctes, et une synchronisation sur ladite trame de manière à programmer le filtre à appliquer avant l'émission de ladite trame, ledit procédé de transmission incluant les étapes suivantes:

   - sélectionner (602) dans quelle bande fréquentielle se trouvent les signaux résultant d'une modulation de ladite trame avec un schéma de modulation sélectionné parmi un ensemble de schémas de modulation en réponse à un constat d'échecs successifs de transmission de ladite trame à destination d'un dispositif récepteur (111), les schémas de modulation agissant dans des bandes fréquentielles respectives;
   - sélectionner (602) le filtre à appliquer en émission de ladite trame parmi ledit second ensemble de filtres, en fonction de ladite bande fréquentielle déterminée par le dispositif transmetteur ; et
   - attendre (603) la fin d'émission de toute trame en cours alors que ladite trame est à émettre, avant d'activer (604) le filtre sélectionné par ledit dispositif transmetteur.

9. Procédé de transmission selon la revendication 8, **caractérisé en ce que** ledit second ensemble de filtres est inclus dans un convertisseur numérique-analogique de type delta-sigma dudit dispositif transmetteur (110).

10. Procédé de transmission/réception de trames de données incluant un procédé de transmission selon la revendication 8 ou 9 et un procédé de réception et démodulation selon l'une quelconque des revendications 1 à 7, **caractérisé en ce que** le dispositif transmetteur (110) transmet chaque trame, et le dispositif récepteur (111) reçoit chaque trame, dans le cadre de communications par courants porteurs en ligne.

11. Produit programme d'ordinateur, **caractérisé en ce qu'**il comprend des instructions pour mettre en œuvre, par un dispositif récepteur (111), le procédé selon l'une quelconque des revendications 1 à 7, lorsque ledit programme est exécuté par un processeur du dispositif récepteur.

12. Moyens de stockage, **caractérisés en ce qu'**ils stockent un programme d'ordinateur comprenant des instructions pour mettre en œuvre, par un dispositif récepteur (111), le procédé selon l'une quelconque des revendications 1 à 7, lorsque ledit programme est exécuté par un processeur du dispositif récepteur.

13. Dispositif récepteur (111) adapté pour recevoir et démoduler des signaux représentatifs de trames de données en provenance d'un dispositif transmetteur (110), lesdites trames de données étant modulées par ledit dispositif transmetteur (110) en fonction d'un schéma de modulation sélectionné parmi un ensemble de schémas de modulation correspondant à un ensemble de schémas de démodulation, lesdits signaux de trames de données incluant un préambule prédéfini en fonction du schéma de modulation selon lequel lesdits signaux de trame de données ont été modulés, le dispositif récepteur comportant :

   - des moyens pour se synchroniser sur une trame de données reçue,
   - des moyens pour déterminer, à partir des signaux de préambule de ladite trame de données reçue, le schéma de modulation qui a été sélectionné par ledit dispositif transmetteur (110) pour la transmission de ladite trame de données, et
   - des moyens pour démoduler les signaux représentatifs de ladite trame de données reçue en utilisant le schéma de modulation déterminé à partir du préambule de ladite trame de données reçue,

   **caractérisé en ce que** le dispositif récepteur (111) comporte en outre :

   - des moyens pour déterminer à partir du schéma de modulation déterminé à partir du préambule de ladite trame de données reçue, la bande fréquentielle correspondant à ce schéma de modulation,

- des moyens pour sélectionner (303), parmi un premier ensemble prédéfini de filtres, un filtre adapté à la bande fréquentielle déterminée correspondant audit schéma de modulation, et
- des moyens pour appliquer ledit filtre sélectionné aux signaux représentatifs de ladite trame de données pour les données qui suivent ledit préambule préalablement à ladite étape de démodulation des signaux représentatifs de ladite trame de données reçue.

14. Système de communication, **caractérisé en ce qu'**il comporte un dispositif récepteur (111) selon la revendication 13 et un dispositif transmetteur (110) adapté pour sélectionner un filtre à appliquer en émission de ladite trame, parmi un second ensemble de filtres adaptés à des bandes fréquentielles respectives distinctes, le dispositif transmetteur (110) étant adapté pour se synchroniser sur ladite trame de manière à programmer le filtre à appliquer avant l'émission de ladite trame, en comportant :

- des moyens pour sélectionner (602) dans quelle bande fréquentielle se trouvent les signaux résultant d'une modulation de ladite trame avec un schéma de modulation sélectionné parmi un ensemble de schémas de modulation en réponse à un constat d'échecs successifs de transmission de ladite trame à destination du dispositif récepteur, les schémas de modulation agissant dans des bandes fréquentielles respectives ;
- des moyens pour sélectionner (602) le filtre à appliquer en émission de ladite trame parmi ledit second ensemble de filtres, en fonction de ladite bande fréquentielle déterminée par le dispositif transmetteur ; et
- des moyens pour attendre (603) la fin d'émission de toute trame en cours alors que ladite trame est à émettre, avant d'activer (604) le filtre sélectionné par ledit dispositif transmetteur.

**Patentansprüche**

1. Verfahren zum Empfang und zur Demodulation von von einer Übertragungsvorrichtung (110) kommenden, für Datenrahmen repräsentativen Signalen durch eine Empfangsvorrichtung (111), wobei die Datenrahmen durch die Übertragungsvorrichtung (110) abhängig von einem Modulationsschema moduliert werden, das aus einer Einheit von Modulationsschemata ausgewählt wird, wobei die Datenrahmensignale eine Präambel enthalten, die abhängig von dem Modulationsschema vordefiniert ist, gemäß dem die Datenrahmensignale moduliert wurden, wobei das Verfahren die folgenden Schritte umfasst:

- Synchronisieren der Empfangsvorrichtung mit einem empfangenen Datenrahmen,
- Bestimmen (302), ausgehend von den Präambelsignalen des empfangenen Datenrahmens, des Modulationsschemas, das von der Übertragungsvorrichtung (110) für die Übertragung des Datenrahmens ausgewählt wurde, und
- Demodulieren der für den empfangenen Datenrahmen repräsentativen Signale unter Verwendung des ausgehend von der Präambel des empfangenen Datenrahmens bestimmten Modulationsschemas,

**dadurch gekennzeichnet, dass** die Empfangsvorrichtung (111) außerdem die folgenden Schritte ausführt:

- Bestimmen ausgehend vom ausgehend von der Präambel des empfangenen Datenrahmens bestimmten Modulationsschema des diesem Modulationsschema entsprechenden Frequenzbands,
- Auswählen (303) eines Filters, der an das dem Modulationsschema entsprechende bestimmte Frequenzband angepasst ist, aus einer ersten vordefinierten Einheit von Filtern, und
- Anwenden des ausgewählten Filters an die für den Datenrahmen repräsentativen Signale für die auf die Präambel folgenden Daten vor dem Schritt der Demodulation der für den empfangenen Datenrahmen repräsentativen Signale.

2. Empfangs- und Demodulationsverfahren nach Anspruch 1, **dadurch gekennzeichnet, dass** die erste Einheit von Filtern in einem Analog-Digital-Wandler des Typs Delta-Sigma der Empfangsvorrichtung enthalten ist.

3. Empfangs- und Demodulationsverfahren nach einem der Ansprüche 1 und 2, **dadurch gekennzeichnet, dass** zur Bestimmung des Modulationsschemas, das von der Übertragungsvorrichtung (110) für die Übertragung des Datenrahmens ausgewählt wurde, ausgehend von den Präambelsignalen des empfangenen Datenrahmens die Empfangsvorrichtung (111) die folgenden Schritte ausführt:

- Abtasten (322) der Signale der Präambel gemäß einer Abtastfrequenz, die für das unter der Einheit von Demodulationsschemata im höchsten Frequenzband wirkende Demodulationsschema geeignet ist, um eine Menge N von entnommenen Tastproben $X_n$ zu erhalten, wobei n ein Abtastindex ist, der von 0 bis N-1 geht, wobei die Menge N von Tastproben in Anbetracht der Abtastfrequenz für eine Integrationsperiode repräsentativ ist, in der das in den Signalen möglicherweise vorhandene Rauschen im Mittel statistisch Null ist;

- Erhalt (323) von Bezugstastproben $Y_m$, die einer Abtastung einer Bezugspräambel gemäß der Abtastfrequenz entsprechen, wobei die Bezugstastproben ebenfalls in der Menge N vorliegen, wobei m ein Abtastindex ist, der von 0 bis N-1 geht;

- Berechnen (324) einer Summe S derart, dass gilt:

$$S = \sum_{n=0}^{N-1} \sum_{m=0}^{N-1} X_n . Y_m$$

- Ausführen (325) eines Vergleichs der berechneten Summe S mit mindestens einem vorbestimmten Wert; und

- Auswählen (326) des bei Empfang des Rahmens anzuwendenden Filters aus der ersten Einheit von Filtern, abhängig vom Ergebnis des Vergleichs.

4. Empfangs- und Demodulationsverfahren nach Anspruch 3, **dadurch gekennzeichnet, dass** die Empfangsvorrichtung (111) aus der Einheit von Demodulationsschemata das bei Empfang des Rahmens anzuwendende Demodulationsschema auswählt (326), abhängig vom Ergebnis des Vergleichs.

5. Empfangs- und Demodulationsverfahren nach einem der Ansprüche 3 und 4, **dadurch gekennzeichnet, dass** die Bezugstastproben $Y_m$ theoretische Tastproben sind, die durch Anwendung einer theoretischen Abtastung gemäß der Abtastfrequenz an die Präambel, wie sie für ein vorbestimmtes Demodulationsschema aus der Einheit von Demodulationsschemata erwartet wird, bestimmt werden, und dass jeder vorbestimmte Wert das Ergebnis der gleichen Berechnung ist wie die Summe S für jedes andere Demodulationsschema der Einheit anders als das vorbestimmte Demodulationsschema, und dass die Empfangsvorrichtung aus der ersten Einheit von Filtern den Filter auswählt (404), der dem Rechenergebnis entspricht, das den höchsten Wert ergibt.

6. Empfangs- und Demodulationsverfahren nach einem der Ansprüche 3 und 4, **dadurch gekennzeichnet, dass** die Einheit von Demodulationsschemata nur zwei Demodulationsschemata aufweist, und die erste Einheit von Filtern nur zwei entsprechende Filter aufweist, die Bezugstastproben Y_m Tastproben sind, die von der Empfangsvorrichtung beim Empfang des letzten vorhergehenden Rahmens von der Übertragungsvorrichtung kommend erfasst werden, und dass die Empfangsvorrichtung den Vergleich der berechneten Summe S mit einem einzigen vorbestimmten Wert ausführt, der ein vordefinierter Schwellwert ist, und dass die Empfangsvorrichtung den für den letzten vorhergehenden Rahmen verwendeten Filter beibehält (505), wenn die Summe S höher als der oder gleich dem vordefinierten Schwellwert ist, und den Filter bezüglich des letzten vorhergehenden Rahmens wechselt (505), wenn die Summe S niedriger als der vordefinierte Schwellwert ist.

7. Empfangs- und Demodulationsverfahren nach einem der Ansprüche 1 bis 6, **dadurch gekennzeichnet, dass** die Einheit von Demodulationsschemata aus einer Einheit von Mehrträger-Demodulationsschemata des Typs OFDM besteht.

8. Verfahren zur Übertragung eines Datenrahmens durch eine Übertragungsvorrichtung (110), wobei das Übertragungsverfahren **dadurch gekennzeichnet ist, dass** es eine Auswahl eines anzuwendenden Filters aus einer zweiten Einheit von Filtern, die an jeweilige unterschiedliche Frequenzbänder angepasst sind, und eine Synchronisation mit dem Rahmen aufweist, um den anzuwendenden Filter vor dem Senden des Rahmens zu programmieren, wobei das Übertragungsverfahren die folgenden Schritte umfasst:

- Auswahl (602), in welchem Frequenzband sich die Signale befinden, die aus einer Modulation des Rahmens mit einem aus einer Einheit von Modulationsschemata ausgewählten Modulationsschema resultieren, als Antwort auf eine Feststellung aufeinanderfolgender Übertragungsfehler des Rahmens an eine Empfangsvorrichtung (111), wobei die Modulationsschemata in jeweiligen Frequenzbändern agieren;

- Auswahl (602) des beim Senden des Rahmens anzuwendenden Filters aus der zweiten Einheit von Filtern, abhängig vom von der Übertragungsvorrichtung bestimmten Frequenzband; und

- Warten (603) auf das Sendeende jedes laufenden Rahmens, während der Rahmen zu senden ist, vor der Aktivierung (604) des von der Übertragungsvorrichtung ausgewählten Filters.

9. Übertragungsverfahren nach Anspruch 8, **dadurch gekennzeichnet, dass** die zweite Einheit von Filtern in einem Digital-Analog-Wandler des Typs Delta-Sigma der Übertragungsvorrichtung (110) enthalten ist.

10. Übertragungs-/Empfangsverfahren von Datenrahmen, das ein Übertragungsverfahren nach Anspruch 8 oder 9 und ein Empfangs- und Demodulationsverfahren nach einem der Ansprüche 1 bis 7 enthält, **dadurch gekennzeichnet, dass** die Übertragungsvorrichtung (110) jeden Rahmen überträgt, und die Empfangsvorrichtung (111) jeden Rahmen empfängt, im Rahmen von Powerline-Kommunikationen.

11. Computerprogrammprodukt, **dadurch gekennzeichnet, dass** es Anweisungen enthält, um das Verfahren nach einem der Ansprüche 1 bis 7 durch eine Empfangsvorrichtung (111) durchzuführen, wenn das Programm von einem Prozessor der Empfangsvorrichtung ausgeführt wird.

12. Speichereinrichtungen, **dadurch gekennzeichnet, dass** sie ein Computerprogramm speichern, das Anweisungen enthält, um das Verfahren nach einem der Ansprüche 1 bis 7 durch eine Empfangsvorrichtung (111) durchzuführen, wenn das Programm von einem Prozessor der Empfangsvorrichtung ausgeführt wird.

13. Empfangsvorrichtung (111), die geeignet ist, Signale zu empfangen und zu demodulieren, die für von einer Übertragungsvorrichtung (110) kommende Datenrahmen repräsentativ sind, wobei die Datenrahmen von der Übertragungsvorrichtung (110) abhängig von einem Modulationsschema moduliert werden, das aus einer Einheit von Modulationsschemata ausgewählt wird, die einer Einheit von Demodulationsschemata entsprechen, wobei die Datenrahmensignale eine vordefinierte Präambel abhängig von dem Modulationsschema enthalten, gemäß dem die Datenrahmensignale moduliert wurden, wobei die Empfangsvorrichtung aufweist:

    - Einrichtungen, um sich mit einem empfangenen Datenrahmen zu synchronisieren,
    - Einrichtungen, um ausgehend von den Präambelsignalen des empfangenen Datenrahmens das Modulationsschema zu bestimmen, das von der Übertragungsvorrichtung (110) für die Übertragung des Datenrahmens ausgewählt wurde, und
    - Einrichtungen, um die für den empfangenen Datenrahmen repräsentativen Signale unter Verwendung des Modulationsschemas zu demodulieren, das ausgehend von der Präambel des empfangenen Datenrahmens bestimmt wird,

    **dadurch gekennzeichnet, dass** die Empfangsvorrichtung (111) außerdem aufweist:

    - Einrichtungen, um ausgehend von dem ausgehend von der Präambel des empfangenen Datenrahmens bestimmten Modulationsschema das diesem Modulationsschema entsprechende Frequenzband zu bestimmen,
    - Einrichtungen, um aus einer ersten vordefinierten Einheit von Filtern einen Filter auszuwählen (303), der für das dem Modulationsschema entsprechende bestimmte Frequenzband geeignet ist, und
    - Einrichtungen, um den ausgewählten Filter an die für den Datenrahmen repräsentativen Signale für die auf die Präambel folgenden Daten anzuwenden, vor dem Schritt der Demodulation der für den empfangenen Datenrahmen repräsentativen Signale.

14. Kommunikationssystem, **dadurch gekennzeichnet, dass** es eine Empfangsvorrichtung (111) nach Anspruch 13 und eine Übertragungsvorrichtung (110) aufweist, die geeignet ist, einen beim Senden des Rahmens anzuwendenden Filter aus einer zweiten Einheit von Filtern auszuwählen, die für jeweilige unterschiedliche Frequenzbänder geeignet sind, wobei die Übertragungsvorrichtung (110) geeignet ist, sich mit dem Rahmen zu synchronisieren, um den anzuwendenden Filter vor dem Senden des Rahmens zu programmieren, indem es aufweist:

    - Einrichtungen, um auszuwählen (602), in welchem Frequenzband sich die Signale befinden, die aus einer Modulation des Rahmens mit einem Modulationsschema resultieren, das aus einer Einheit von Modulationsschemata ausgewählt wird, als Antwort auf eine Feststellung aufeinanderfolgender Übertragungsfehler des Rahmens an die Empfangsvorrichtung, wobei die Modulationsschemata in jeweiligen Frequenzbändern wirken;
    - Einrichtungen, um den beim Senden des Rahmens anzuwendenden Filter aus der zweiten Einheit von Filtern auszuwählen (602), abhängig vom von der Übertragungsvorrichtung bestimmten Frequenzband; und
    - Einrichtungen, um das Sendeende jedes laufenden Rahmens abzuwarten (603), während der Rahmen zu senden ist, ehe der von der Übertragungsvorrichtung ausgewählte Filter aktiviert wird (604).

**Claims**

1. Method for receiving and demodulating, by a receiving device (111), signals representing data frames coming from a transmitting device (110), said data frames being modulated by said transmitting device (110) according to a modulation scheme selected from amongst a set of modulation schemes, said data frame signals including a preamble defined according to the modulation scheme according to which said data frame signals were modulated, said method including the following steps:

- synchronizing said receiving device on a received data frame,
- determining (302), from the preamble signals of said received data frame, the modulation scheme that was selected by said transmitting device (110) for transmitting said data frame, and
- demodulating the signals representing said received data frame by using the modulation scheme determined from the preamble of said received data frame,

**characterized in that** the receiving device (111) further performs the following steps:

- determining, from the modulation scheme determined from the preamble of said received data frame, the frequency band corresponding to this modulation scheme,
- selecting (303), from amongst a first predefined set of filters, a filter adapted to the determined frequency band corresponding to said modulation scheme, and
- applying said selected filter to the signals representing said data frame for the data that follows said preamble prior to said step of demodulating the signals representing said received data frame.

2.   Method for receiving and demodulating according to claim 1, **characterized in that** said first set of filters is included in an analogue to digital converter of the delta-sigma type of said receiving device.

3.   Method for receiving and demodulating according to any one of claims 1 and 2, **characterized in that**, for determining, from the preamble signals of said received data frame, the modulation scheme that was selected by said transmitting device (110) for transmitting said data frame, the receiving device (111) performs the following steps:

- sampling (322) the preamble signals according to a sampling frequency adapted to the demodulation scheme acting in the highest frequency band among the set of demodulation schemes, so as to obtain a quantity $N$ of quoted samples $X_n$, $n$ being a sampling index ranging from 0 to $N-1$,
the quantity $N$ of samples, in view of said sampling frequency, representing an integration period over which the noise potentially present in said received signals is statistically null on average;
- obtaining (323) reference samples $Y_m$ corresponding to a sampling of a reference preamble according to said sampling frequency, the reference samples also being of quantity $N$, $m$ being a sampling index ranging from 0 to $N-1$;
- calculating (324) a sum $S$ such that:

$$S = \sum_{n=0}^{N-1} \sum_{m=0}^{N-1} X_n.Y_m$$

- making (325) a comparison of the calculated sum S with at least one predetermined value; and
- selecting (326) the filter to be applied on reception of said frame from amongst said first set of filters, according to the result of the comparison.

4.   Method for receiving and demodulating according to claim 3, **characterized in that** the receiving device (111) selects (326), from amongst the set of demodulation schemes, the demodulation scheme to be applied in reception of the frame, according to the result of said comparison.

5.   Method for receiving and demodulating according to any one of claims 3 and 4, **characterized in that** the reference samples $Y_m$ are theoretical samples determined by applying a theoretical sampling according to said sampling frequency to the preamble as expected for a predetermined demodulation scheme among said set of demodulation schemes, and each said predetermined value is the result of the same calculation as the sum S for each other demodulation scheme of said set other than said predetermined demodulation scheme, and the receiving device selects (404) the filter corresponding to the calculation result giving the highest value among said first set of filters.

6.   Method for receiving and demodulating according to any one of claims 3 and 4, **characterized in that** the set of demodulation schemes comprises solely two demodulation schemes and said first set of filters comprises solely two corresponding filters, the reference samples $Y_m$ are samples recorded by the receiving device when the last preceding frame coming from said transmitting device is received, and **in that** the receiving device makes a comparison of the calculated sum S with a single predetermined value that is a predefined threshold, and **in that** the receiving device retains (505) the filter used for said last preceding frame when the sum S is greater than or equal to the predefined threshold and changes (505) filter with respect to said last preceding frame when the sum S is below the predefined threshold.

7.   Method for receiving and demodulating according to any one of claims 1 to 6, **characterized in that** the set of demodulation schemes consists of a set of multicarrier demodulation schemes of the OFDM type.

8. Method for transmitting a data frame by a transmitting device (110), said for transmitting method being **characterized in that** it comprises selecting a filter to be applied from amongst a second set of filters adapted to distinct respective frequency bands, and synchronizing on said frame so as to set up the filter to be applied before sending said frame, said transmission method including the following steps:

- selecting (602) in which frequency band are situated the signals resulting from a modulation of said selected frame with a modulation scheme selected from amongst a set of demodulation schemes in response to noting successive failures in transmission of said frame toward a receiving device (111), the modulation schemes acting in respective frequency bands;
- selecting (602) the filter to be applied for sending said frame from amongst said second set of filters, according to said frequency band determined by the transmitting device; and
- awaiting (603) the end of sending of any current frame while said frame is to be sent, before activating (604) the filter selected by said transmitting device.

9. Method for transmitting according to claim 8, **characterized in that** said second set of filters is included in a digital to analogue converter of the delta-sigma type of said transmitting device (110).

10. Method for transmitting/receiving data frames including a method for transmitting according to claim 8 or 9 and a method for receiving and demodulating according to any one of claims 1 to 7, **characterized in that** the transmitting device (110) transmits each frame, and the receiving device (111) receives each frame, in the context of powerline communications.

11. Computer program product, **characterized in that** it comprises instructions for implementing, by a receiving device (111), the method according to any one of claims 1 to 7, when said program is executed by a processor of the receiving device.

12. Storage means, **characterized in that** they store a computer program containing instructions for implementing, by a receiving device (111), the method according to any one of claims 1 to 7, when said program is executed by a processor of said receiving device.

13. Receiving device (111) adapted for receiving and demodulating signals representing data frames coming from a transmitting device (110), said data frames being modulated by said transmitting device (110) according to a modulation scheme selected from amongst a set of modulation schemes corresponding to a set of demodulation schemes, said data frame signals including a preamble predefined according to the modulation scheme according to which said data frame signals were modulated, the receiving device comprising:

- means for synchronizing on a received data frame,
- means for determining, from the preamble signals of said received data frame, the modulation scheme that was selected by said transmitting device (110) for transmitting said data frame, and
- means for demodulating the signals representing said received data frame by using said modulation scheme determined from the preamble of said received data frame,

**characterized in that** said receiving device (111) further comprises:

- means for determining, from the modulation scheme determined from the preamble of said received data frame, the frequency band corresponding to this modulation scheme,
- means for selecting (303), from amongst a first predefined set of filters, a filter adapted to the determined frequency band corresponding to said modulation scheme, and
- means for applying said selected filter to the signals representing said data frame for the data that follows said preamble prior to said step of demodulating the signals representing said received data frame.

14. Communication system, **characterized in that** it comprises a receiving device (111) according to claim 13 and a transmitting device (110) adapted for selecting a filter to be applied for sending said frame, from amongst a second set of filters adapted to distinct respective frequency bands, the transmitting device (110) being adapted for synchronizing on said frame so as to set up the filter to be applied before sending said frame, comprising:

- means for selecting (602) in which frequency band are situated the signals resulting from a modulation of said frame with a modulation scheme selected from amongst a set of modulation schemes in response to noting successive failures in transmission of said data frame toward said receiving device, the modulation schemes acting in respective frequency bands;
- means for selecting (602) the filter to be applied for sending said frame from amongst said second set of filters, according to said frequency band determined by the transmitting device; and

- means for awaiting (603) the end of sending of any current frame while said frame is to be sent, before activating (604) the filter selected by said transmitting device.

| | | | | | | | | | |
|---|---|---|---|---|---|---|---|---|---|
| 110 | | | | | | | 111 | | |

120

Fig. 1A

| 130 | 130 | 130 | 130 | 130 | 130 | 130 | 130 | 131 | 132 |
|---|---|---|---|---|---|---|---|---|---|

Fig. 1B

153

152
SYNCH

150
RX

151
SAMP

154
SEL

155
FILA

156
FILB

160
PRO

157

111

Fig. 1C

Fig. 1D

Fig. 1E

## Fig. 2

## Fig. 3A

Réception de signaux correspondant
à un préambule de trame `321`

Echantillonnage des signaux reçus `322`

`330`

Obtention d'échantillons de référence `323`

Calcul d'une somme `324`

Comparaison `325`

Sélection d'un filtre et d'un schéma
de démodulation en fonction du
résultat de la comparaison `326`

Fig. 3B

Réception de signaux correspondant
à un préambule de trame `401`

Echantillonnage des signaux reçus `402`

`410`

Somme avec des échantillons de préambule
théorique, pour chaque schéma de
démodulation applicable `403`

Sélection d'un filtre et du schéma
de démodulation correspondant à la
somme maximale `404`

Fig. 4

Réception de signaux correspondant à un préambule de trame — 501

Echantillonnage des signaux reçus — 502

510

Somme avec des échantillons du préambule de la dernière trame précédente — 503

Comparaison de la somme avec une valeur seuil prédéfinie — 504

Maintien ou changement de filtre et/ou de schéma de démodulation en fonction du résultat de la comparaison — 505

Fig. 5

610

Constat d'échecs successifs de transmission d'une trame — 601

Sélection d'une bande fréquentielle et d'un filtre à appliquer — 602

Attente de fin de transmission de trame en cours — 603

Configuration de filtre en émission — 604

Emission de la trame — 605

Fig. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 03015292 A2

- US 20120093198 A1

**Littérature non-brevet citée dans la description**

- **YITRAN.** G.hnem: Proposai for functional requirements of a preamble based coexistence mechanism; TD11RV-069. *ITU-T draft; Study Period 2009-2012, International,* 29 Novembre 2011, vol. 4/15, 1-10